# EUROPEAN PATENT SPECIFICATION

(11) **EP 0 599 216 B1**
(45) Date of publication and mention of the grant of the patent: **03.07.1996**
(21) Application number: 93118649.8
(22) Date of filing: 19.11.1993
(51) Int. Cl.: A47J 27/08

(54) **Pressure cooking vessel**
Dampfdruckkochtopf
Récipient de cuisson sous pression

(30) Priority: 25.11.1992 DE 4239552
(43) Date of publication of application: 01.06.1994
(73) Proprietor: Niese, Karl, D-67745 Grumbach (DE)
(72) Inventor: Niese, Karl, D-67745 Grumbach (DE)
(74) Representative: Oppermann, Ewald, Dipl.-Ing.

(56) References cited:
- EP-A- 0 108 203
- EP-A- 0 139 772
- WO-A-92/03080

## Description

Die Erfindung bezieht sich auf einen Dampfdruckkochtopf entsprechend den Oberbegriffen der nebengeordneten Patentansprüche 1 und 2.

Bei einem derartigen bekannten Dampfdruckkochtopf (EP 0 108 203 B1) wird der Deckel nach weitgehendem Druckabbau über das Dampfauslaßventil dadurch geöffnet, daß die Haube zunächst nach unten gedrückt wird, bis die zwischen der Haube und dem dort als Rahmen bezeichneten Winkelprofilring wirksamen Sperrglieder außer Eingriff gelangen, worauf die Haube zur radialen Öffnungsverlagerung der Klammern mittels des Griffs relativ zum Rahmen gedreht werden muß. Um die Haube aber relativ zum Rahmen verdrehen zu können, müssen die den Rahmen stationär am Topf haltenden Reibungskräfte unter allen Umständen größer sein als die für das Drehen der Haube zu überwindenden Reibungskräfte, weil andernfalls der Deckel nicht in die Öffnungsstellung gebracht werden kann. Es kann sich als schwierig erweisen, derartige Reibungsverhältnisse unter allen Betriebsbedingungen reproduzierbar aufrechtzuerhalten. Beim Schließen des Topfes durch gegenläufiges Verdrehen der Haube gegenüber dem Rahmen liegen entsprechende Verhältnisse vor. Hier müssen nach Schließantrieb der Klammern die aus Zapfen und Bohrungen bestehenden Sperrglieder wieder exakt in Fluchtungslage gedreht werden, damit sich die Haube erneut an die Dichtung anlegen kann. Gelingt diese Relativeinstellung von Haube und Rahmen nicht, ist der Dampfdruckkochtopf nicht dicht, mit der Folge, daß sich im Topfinneren kein Druck aufbauen kann. Nachteilig bei diesem bekannten Dampfdruckkochtopf ist auch, daß bei der üblichen Abkühlung des Deckels vor dem Öffnen unter dem Wasserhahn Wasser durch die offenen Spalträume zwischen Haube und Rahmen sowie zwischen Haube und Dichtung in das Topfinnere eindringen kann.

Der Erfindung liegt demgegenüber die Aufgabe zugrunde, einen Dampfdruckkochtopf bereitzustellen, dessen Bedienung einfach und funktionssicher ist und bei dem das Eindringen von über die Haube fließendem Kühlwasser in das Topfinnere ausgeschlossen ist.

Die gestellte Aufgabe wird jeweils durch die kennzeichnenden Merkmale der Ansprüche 1 und 2 gelöst. Vorteilhafte Weiterbildungen des erfindungsgemäßen Dampfdruckkochtopfs sind in den Unteransprüchen angegeben und nachstehend ebenfalls erläutert.

Nach dem Grundgedanken der Erfindung erfolgt der Restdruckabbau und das Öffnen sowie das Schließen des Dampfdruckkochtopfs im wesentlichen in nur einer Bewegungsrichtung der Haube, nämlich in senkrechter Richtung. Dieses wird durch die besondere Ausbildung der Haube, die Anordnung eines teils in die Haube und teils in den Topf hineinreichenden, den Dichtring haltenden Zentrierrings, die Anbringung von nach unten weisenden, durch einen radialen Abstand zwischen der Umfangswand der Haube und dem Topfrand hindurchreichenden, an die Klammern angreifenden Verschlußelementen und die Anbringung von zwischen Zentrierring und Haube (Anspruch 1) bzw. zwischen den Klammern und der Haube (Anspruch 2) wirksamen, die Öffnungsstellung nach im wesentlichen vertikaler Verschiebung durch Verrastung fixierender, miteinander verschiebbar eingreifender, federbelasteter Elemente ermöglicht. Die Anordnung ist so getroffen, daß diese Elemente beim Schließen des Topfes nach Aufhebung der Verrastung durch geringfügiges Verdrehen der Haube gegenüber dem Zentrierring bzw. gegenüber den Klammern dafür sorgen, daß die beim Öffnen gespannten Federn selbsttätig die Abdichtung des Dampfdruckkochtopfs bei gleichzeitiger Verklammerung der Ränder des Deckels und des Topfs herbeiführen. Die Bedienung des erfindungsgemäßen Dampfdruckkochtopfs ist einfach und funktionssicher, und die den Topfrand übergreifende Umfangswand der Haube läßt das Eindringen von Abkühlwasser in das Topfinnere nicht zu.

Durch die Merkmale des Anspruchs 3 wird eine vorteilhafte Ausgestaltung der Umfangswand der Haube vorgeschlagen, mit deren Hilfe auf einfache Weise sichergestellt ist, daß beim Öffnungsvorgang die der zylindrischen Innenfläche anliegende Dichtlippe des Dichtrings von der Umfangswand zum Abbau des Restdrucks partiell abgehoben wird. Diese Merkmale sorgen auch dafür, daß die Abdichtung beim Schließvorgang durch vertikale Relativbewegung ohne vorhergehende Drehbewegung wieder herbeigeführt wird.

Für die Abdichtung der Haube des mit dem Dichtring auf den Rand des Topfs aufgesetzten Deckels ist der Dichtring vorteilhaft auf die im Anspruch 4 angegebene Weise ausgebildet. Die Dichtlippe besitzt hierbei eine dem Innendruck ausgesetzte Innenfläche, die für eine dichte Anpressung der Dichtlippe unter der Einwirkung des Innendrucks an die zylindrische Innenfläche sorgt. Der Dichtring mit seiner Dichtlippe und der den Dichtring haltende Zentrierring bilden eine an der zylindrischen Innenfläche nach Art eines Ringkolbens verschiebbare Struktur.

Zu der ringkolbenähnlichen Struktur gehört entsprechend den Merkmalen des Anspruchs 5 vorteilhaft auch ein Stützring, der den an dem Zentrierring gehaltenen Dichtring gewissermaßen armiert und die flexibel an den Dichtring angeschlossene Dichtlippe von unten her abstützt. Dichtring und Stützring sind zweckmäßig voneinander lösbar angeordnet, wobei der Dichtring auf den Innenumfang des Stützrings aufgeschoben ist. Zentrierring, Stützring und dazwischen befindlicher Dichtring sind in ihren Durchmesserabmessungen so aufeinander abgestimmt, daß sich diese Teile im Betrieb des Dampfdruckkochtopfs wie eine Einheit verhalten, jedoch für Reinigungsarbeiten voneinander zerstörungsfrei getrennt und wieder zusammengebaut werden können. Die Anbringung des Stützrings bietet die vorteilhafte Möglichkeit, gemäß Anspruch 6 an diesem die Verschlußelemente zu befestigen.

Aus Anspruch 7 geht eine bevorzugte Ausbildung der die radiale Verlagerung der Klammern nach Maßgabe der axialen Verschiebung der Haube steuernden Verschlußmechanik hervor. Die radialen Verlagerungen der Klammern werden hierbei durch Keilwirkung erzielt, wobei zwei Keilbewegungen einander überlagert sind, nämlich eine bezüglich der Topfachse axial gerichtete und eine dazu radial gerichtete Bewegung.

Die in axialer Richtung unverschiebbare Anordnung der Klammern an der Haube kann auf einfache Weise wie im Anspruch 8 angegeben vorgesehen werden. Auf diese Weise wird sichergestellt, daß die Klammern jeder axialen Verschiebung der Haube unmittelbar folgen.

Der Zentrierring ist an der Haube in einer besonders zweckmäßigen Anordnung entsprechend Anspruch 9 geführt und gegenüber der Haube in der Öffnungsstellung verrastbar. Hierbei kann durch die Merkmale des Anspruchs 10 die Anordnung so erfolgen, daß die miteinander eingreifenden Elemente von Zentrierring und Haube in konstruktiver Abstimmung auf die aus den Zungen und den Führungsschlitzen bestehenden Verschlußelemente so ausgebildet sind, daß zur Verhinderung des unbeabsichtigten Zerlegens des Deckels eine erhöhte Kraft auf die Haube zur Einwirkung gebracht werden muß, um nicht nur der Federkraft entgegenzuwirken, sondern auch noch eine elastische Verformung der Dichtlippe des Dichtrings vorzunehmen, bis die Zungen aus den Führungsschlitzen der Klammern austreten. Erst danach können die Klammern radial nach außen abgezogen werden.

In Anspruch 11 ist eine zweckmäßige Ausbildung der einerseits auf die Haube und andererseits auf den Zentrierring einwirkenden Federn angegeben. Die dabei verwendeten Schraubendrehfedern erzeugen Querkräfte, welche zur Unterstützung der Öffnungsverrastung der miteinander eingreifenden Elemente von Zentrierring und Haube herangezogen werden, wie das im Anspruch 12 angegeben ist.

Eine andere Ausführungsform gemaß Anspruch 13 sieht vor, daß die miteinander eingreifenden Elemente von Zentrierring und Haube während der Öffnungsverlagerung der Haube eine im Drehwinkelbetrag geringfügige Relativdrehung zwischen Zentrierring und Haube erzwingen, bis Verrastung in der Öffnungsstellung erfolgt. Bei Schließverlagerung der Haube wird die Verrastung durch eine entsprechend geringfügige Relativdrehung in Gegenrichtung aufgehoben.

Die bei dieser Ausführungsform vorteilhaft zur Anwendung gelangenden Federn, die aus den Ansprüchen 14 und 15 hervorgehen, müssen den Verrastungsvorgang zwischen Haube und Zentrierring nicht durch Querkräfte unterstützen. Bei Aufhebung der Verrastung sind daher auch keine nennenswerten Federquerkräfte zu überwinden.

Bei der Ausführungsform nach Anspruch 2 befinden sich gemäß Anspruch 16 die Nasen zur Fixierung der Öffnungsstellung vorteilhafterweise unten an der Umfangswand der Haube, während sich die zugehörigen Kulissenschlitze im unteren Schenkel der Klammern befinden. Hierdurch wird auf sehr einfache und funktionssichere Weise in der Öffnungsstellung durch geringfügige Drehung der Haube gegenüber den Klammern eine unmittelbare Verklinkung zwischen Haube und Klammern bei gespannter Feder erreicht, die zum Schließen des Topfes durch ebenso geringfügige Drehung der Haube in Gegenrichtung wieder aufgehoben werden kann.

Eine für die Ausführungsform nach den Ansprüchen 2 und 16 gut geeignete, aber auch für die weiter vorn erläuterte Ausführungsform einsetzbare Federausbildung geht aus Anspruch 17 hervor. Die ringförmige, einteilige Biegefeder gemäß Anspruch 17 nimmt im Deckel nur wenig Platz in Anspruch, läßt sich leicht reinigen und kann mühelos angebracht und entfernt werden.

Anspruch 18 bezieht sich auf eine besonders vorteilhafte Ausbildung des Topfrandes als Schüttrand. Die hierfür vorgesehene nach oben gerichtete konvexe Wölbung des Randes erleichtert nicht nur ein gezieltes Ausgießen des Topfinhalts, sondern stellt auch eine über den Umfang umlaufende gleichmäßige Abdichtrippe zur Verfügung, welche dem Dichtring bei geschlossenem Dampfdruckkochtopf nach Maßgabe des Innendrucks mit einer die Abdichtwirkung vergrößernden hohen Flächenpressung anliegt.

Die Erfindung wird nachfolgend anhand der mehrere Ausführungsbeispiele darstellenden Zeichnungen näher erläutert. Darin zeigt:
- Fig. 1: den geschlossenen Dampfdruckkochtopf in einer Seitenansicht,
- Fig. 2: die Draufsicht auf den Dampfdruckkochtopf gemaß Fig. 1,
- Fig. 3: die Unteransicht des Dampfdruckkochtopfs gemäß Fig. 1,
- Fig. 4: die abgebrochen dargestellte Schnittansicht entsprechend der Linie IV-IV der Figuren 2 und 3,
- Fig. 5: die abgebrochen dargestellte Schnittansicht entsprechend der Linie V-V der Figuren 2 und 3 in der ZU-Stellung der gezeigten Elemente,
- Fig. 6: die abgebrochen dargestellte Schnittansicht entsprechend der Linie VI-VI der Figuren 2 und 3 in der ZU-Stellung der gezeigten Elemente,
- Fig. 7: die Unteransicht des Dampfdruckkochtopfs (ohne seitliche Griffe) mit in ZU-Stellung in durchgehenden und in AUF-Stellung in strichpunktierten Linien dargestellten Klammern,
- Fig. 8: in abgebrochener Unteransicht eine Klammer und den Stützring in die ZU-Stellung veranschaulichender Relativlage,
- Fig. 9: den abgebrochenen Schnitt entlang der Linie IX-IX in Fig. 8,
- Fig. 10: eine der Fig. 8 ähnliche Unteransicht, jedoch in die AUF-Stellung veranschaulichender Relativlage von Klammer und Stützring,
- Fig. 11: den abgebrochenen Schnitt entlang der Linie XI-XI in Fig. 10,
- Fig. 12: eine der Fig. 5 ähnliche Schnittansicht, jedoch in AUF-Stellung der gezeigten Elemente, in welcher der Deckel vom Topf abgehoben werden kann,
- Fig. 13: eine der Fig. 6 ähnliche Schnittansicht, jedoch in der AUF-Stellung gemäß Fig. 12,
- Fig. 14: eine den Figuren 5 und 12 ähnliche, jedoch nur den Deckel zeigende Schnittansicht, in einer Stellung zum Zerlegen des Deckels,
- Fig. 15: eine den Figuren 6 und 13 ähnliche, jedoch nur den Deckel zeigende Schnittansicht in der Stellung zum Zerlegen des Deckels gemäß Fig. 14,
- Fig. 16: eine Unteransicht ähnlich den Figuren 8 und 10, jedoch in der Stellung zum Zerlegen des Deckels,
- Fig. 17: den abgebrochenen Schnitt entlang der Linie XVII-XVII in Fig. 16,
- Fig. 18: eine der Fig. 5 ähnliche Schnittansicht, jedoch mit einer anderen Ausführungsform der miteinander eingreifenden Elemente von Zentrierring und Haube, einschließlich einer anderen Ausführungsform der zwischen diesen Teilen wirksamen Federn, in der ZU-Stellung der gezeigten Elemente,
- Fig. 19: eine der Fig. 6 ähnliche Schnittansicht der in Fig. 18 gezeigten anderen Ausführungsform in der ZU-Stellung,
- Fig. 20: eine der Fig. 18 ähnliche Schnittansicht der anderen Ausführungsform, jedoch in der AUF-Stellung der gezeigten Elemente,
- Fig. 21: eine der Fig. 19 ähnliche Schnittansicht, jedoch in der AUF-Stellung gemäß Fig. 20,
- Fig. 22: eine den Figuren 18 und 20 ähnliche, jedoch entsprechend Fig. 14 nur den Deckel zeigende Schnittansicht, in einer Stellung zum Zerlegen des Deckels,
- Fig. 23: eine den Figuren 19 und 21 ähnliche, jedoch nur den Deckel zeigende Schnittansicht in der Stellung zum Zerlegen des Deckels gemäß Fig. 22,
- Fig. 24: die Unteransicht einer weiteren Ausführungsform des Dampfdruckkochtopfs in ZU-Stellung,
- Fig. 25: die abgebrochen dargestellte Schnittansicht entsprechend der Linie XXV - XXV der Fig. 24,
- Fig. 26: die abgebrochen dargestellte Unteransicht einer Klammer gemäß der weiteren Ausführungsform in ZU-Stellung,
- Fig. 27: die abgebrochen dargestellte Unteransicht dieser Klammer in AUF-Stellung,
- Fig. 28: die Unteransicht des Dampfdruckkochtopfs gemäß der weiteren Ausführungsform in AUF-Stellung,
- Fig. 29: die abgebrochen dargestellte Schnittansicht entsprechend der Linie XXIX - XXIX der Fig. 28,
- Fig. 30: die Draufsicht der bei der Ausführungsform gemäß der Fig. 24 bis 29 verwendeten Feder,
- Fig. 31: die aufgeschnitten und gestreckt dargestellte Seitenansicht der ungespannten Feder gemäß Fig. 30,
- Fig. 32: die aufgeschnitten und gestreckt dargestellte Seitenansicht der vorgespannten Feder in der ZU-Stellung des Deckels,
- Fig. 33: die aufgeschnitten und gestreckt dargestellte Seitenansicht der blockgespannten Feder in der AUF-stellung des Deckels,
- Fig. 34: eine den Fig. 25 und 29 ähnliche abgebrochen dargestellte Schnittansicht in der Stellung zum Zerlegen des Deckels,
- Fig. 35: eine der Fig. 25 ähnliche Schnittansicht mit einer anderen Variante der bei der weiteren Ausführungsform des Dampfdruckkochtopfs verwendeten Feder,
- Fig. 36: eine der Fig. 29 ähnliche Schnittansicht mit der Federvariante gemäß Fig. 35,
- Fig. 37: die der Fig. 32 ähnliche Seitenansicht der vorgespannten Feder entsprechend der Federvariante gemäß Fig. 35 und 36 und
- Fig. 38: die der Fig. 33 ähnliche Seitenansicht der blockgespannten Feder entsprechend der Federvariante.

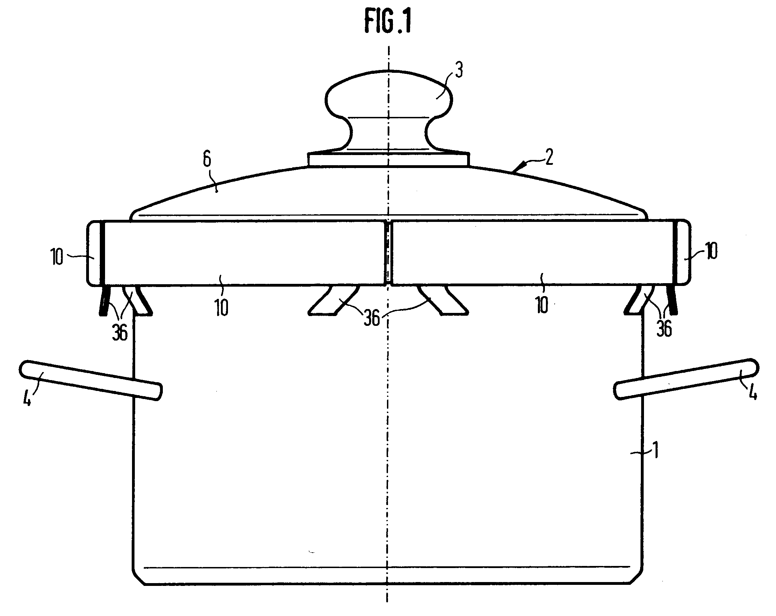

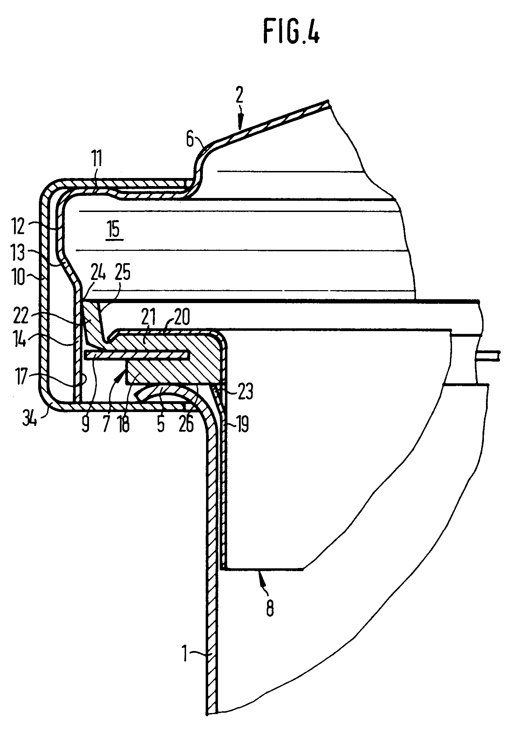

Zunächst wird zur Erläuterung der ersten Ausführungsform des Dampfdruckkochtopfs auf die Fig. 1 bis 23 Bezug genommen. Zur Verdeutlichung von Einzelheiten sind die Zeichnungen in zwei Gruppen in unterschiedlichen Maßstäben dargestellt. Die Fig. 1 bis 3 und 7 der ersten Gruppe sind in demselben Maßstab dargestellt. Entsprechendes gilt für die Fig. 4, 5, 6 und 8 bis 23 der zweiten Gruppe, die aber gegenüber den Figuren der ersten Gruppe in einem größeren Maßstab dargestellt sind.

Der Dampfdruckkochtopf besteht aus dem den Kochgutbehälter bildenden Topf 1 und dem in seiner Teilgesamtheit mit 2 bezeichneten Deckel. Der Deckel 2 ist mit einem konzentrisch dazu angebrachten Griff 3 versehen. Der Topf 1 weist seitliche Griffe 4 auf. Hier nicht dargestellt, aber selbstverständlich vorhanden, vorzugsweise im Griff 3 untergebracht, sind ein Druckbegrenzungs-, Sicherheits-, Abdampf- und Entlüftungsventil sowie ggf. eine Druckanzeige.

Wie beispielsweise aus Fig. 4 hervorgeht, weist der im wesentlichen hohlzylindrische Topf 1 einen flanschartigen, umlaufend gleichförmigen Schüttrand 5 auf, der im Querschnitt gesehen nach oben konvex gewölbt ist. Aufgrund dieser Formgebung werden einerseits eine für die Abdichtung des Dampfdruckkochtopfs günstige kleine obere Auflagefläche und damit eine hohe Flächenpressung und andererseits gute Ausgießeigenschaften erzielt.

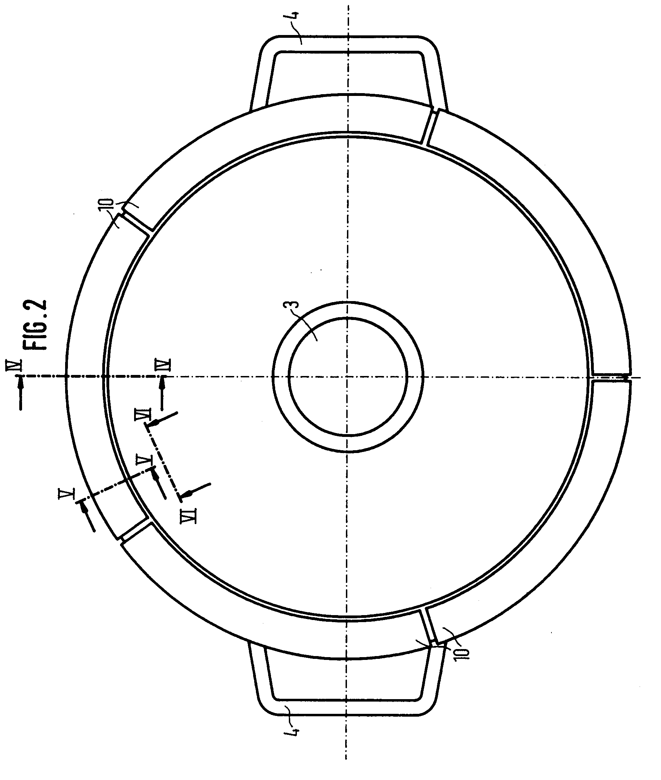

Der Deckel 2 besteht im wesentlichen aus einer Haube 6, einem mit dem Schuttrand 5 zusammenwirkenden Dichtring 7 aus einem gummielastischen Material, einem allgemein mit 8 bezeichneten Zentrierring, einem Stützring 9 und einer Mehrzahl von Klammern 10. Die Klammern 10 weisen einen U-förmigen Querschnitt auf und umgreifen sowohl den Randbereich der Haube 6 als auch den Schüttrand 5 und halten so Topf 1 und Deckel 2 gegen die Wirkung des beim Kochen im Inneren des Dampfdruckkochtopfs entstehenden Überdrucks zusammen. Wie aus den Fig. 2, 3 und 7 hervorgeht, sind im gezeigten Beispiel fünf Klammern 10 gleicher Abmessungen am Umfang des Deckels 2 vorgesehen. Die Klammern 10 sind als Ringsektoren ausgebildet, deren benachbarte Enden sich auch bei geschlossenem Dampfdruckkochtopf nicht berühren.

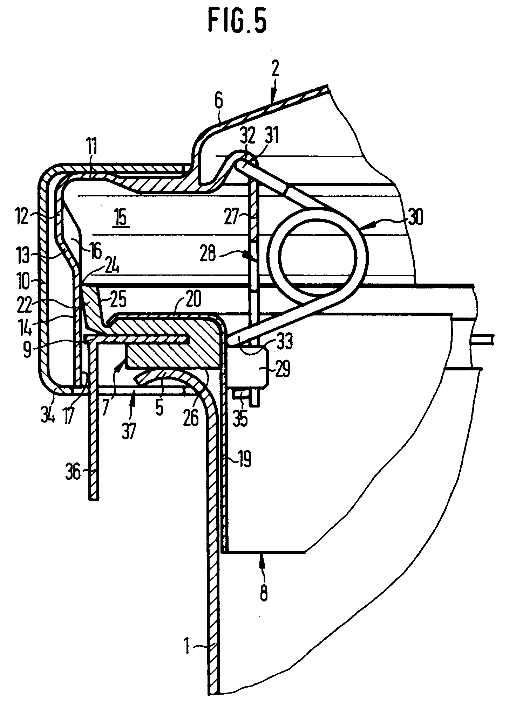

Die Haube 6 besitzt an ihrem Randbereich einen Auflagerand 11 für die oberen Schenkel der Klammern 10. An den Auflagerand 11 schließt sich ein nach unten weisender Wandabschnitt 12 an, dem ein nach unten und einwärts gerichteter, d.h. konischer Übergangsabschnitt 13 folgt. Dieser wiederum findet seine Fortsetzung durch einen Zylinderabschnitt 14. Die Abschnitte 12, 13 und 14 bilden eine durchgehende Seitenwand der Haube 6 und besitzen eine Gesamthöhe, die nur geringfügig kleiner ist als das lichte Höheninnenmaß des U-förmigen Profils der Klammern 10. Der Wandabschnitt 12 weist einen größeren Innendurchmesser als der Zylinderabschnitt 14 auf, wodurch im Bereich des Wandabschnitts 12 eine Aufweitung 15 innerhalb der Haube 6 gebildet ist. In der Aufweitung 15 befindet sich mindestens ein Steg 16 (Fig. 5, 12, 14, 18, 20, 22), vorzugsweise mehrere derartige am Umfang verteilt angeordnete Stege, die jeweils unten fluchtend an die zylindrische Innenfläche 17 des Zylinderabschnitts 14 anschließen und oben an der Innenfläche des Wandabschnitts 12 mit Abstand zur Innenfläche des Auflagerandes 11 enden.

Der Dichtring 7 wird durch den in eine Umfangsnut des Dichtrings eingelegten Stützring 9 stabilisiert. Der Außendurchmesser des Stützrings 9 ist kleiner als der Innendurchmesser des Zylinderabschnitts 14. Der Stützring 9 steht über den unteren Schenkel 18 des Dichtrings 7 über, d.h. der Außendurchmesser des unteren Schenkels 18 ist beträchtlich kleiner als der Innendurchmesser des Zylinderabschnitts 14 der Haube 6. Der Zentrierring 8 stützt den Dichtring 7 durch eine hohlzylindrische Wandung 19 nach innen und durch einen Flansch 20 nach oben ab. Der Flansch 20 übergreift den oberen Schenkel 21 des Dichtrings 7, endet aber mit radialem Abstand zu der Innenfläche 17 des Zylinderabschnitts 14. Der obere Schenkel 21 tritt durch den Spalt zwischen dem Außenrand des Flansches 20 und der oberen Fläche des Stützrings 9 hindurch und ist vorzugsweise an dieser Stelle zur Erhöhung der Flexibilität einer an den Flansch 20 anschließenden Dichtlippe 22 verdünnt. Durch den Flansch 20 und an der hohlzylindrischen Wandung 19 außen befindliche und vorzugsweise aus dieser ausgestellte Widerhaken 23 werden Dichtring 7, Stützring 9 und Zentrierring 8 zueinander fixiert. Der Außendurchmesser der hohlzylindrischen Wandung 19 ist kleiner als der Innendurchmesser des Topfes 1, so daß sich der Deckel 2 durch seinen in die Topföffnung eingreifenden Zentrierring 8 geführt und zentriert auf den Topf 1 aufsetzen und davon abnehmen läßt.

Die Dichtlippe 22 erstreckt sich schräg nach oben und außen und liegt aufgrund der gummielastischen Materialeigenschaften des Dichtrings 7 bei geschlossenem Dampfdruckkochtopf (Fig. 4, 5) mit ihrer oberen Dichtkante 24 der zylindrischen Innenfläche 17 der Haube 6 dicht an. Der beim Kochen im Dampfdruckkochtopf entstehende Überdruck wirkt auf die Innenfläche 25 der Dichtlippe 22 ein, wodurch die Anpreßkraft der Dichtkante 24 auf die zylindrische Innenfläche 17 erhöht wird und der Dampfdruckkochtopf an dieser Stelle gegenüber der Außenatmosphäre vollständig und zuverlässig abgedichtet wird.

Die untere Dichtfläche 26 des Dichtrings 7 liegt auf dem Schüttrand 5 auf und wird diesem bei geschlossenem Dampfdruckkochtopf auf unten beschriebene Weise durch Federkraft dicht angedrückt. Da der Durchmesser der zylindrischen Innenfläche 17 größer ist als der Durchmesser der kreisförmigen Auflagelinie zwischen Dichtfläche 26 und Schüttrand 5, ergibt die aus den Kreisflächen dieser beiden unterschiedlichen Durchmesser gebildete Differenz eine Kreisringfläche, auf welche der beim Kochen im Dampfdruckkochtopf entstehende Überdruck ebenfalls einwirkt. Dadurch wird die Anpreßkraft der Dichtfläche 26 auf den Schüttrand 5 erhöht, so daß auch an dieser Stelle der Dampfdruckkochtopf gegenüber der Außenatmosphäre vollständig und zuverlässig abgedichtet wird.

Eine Ausführungsform der miteinander eingreifenden Elemente von Zentrierring 8 und Haube 2 ist in den Figuren 5, 6 und 12 bis 15 in unterschiedlichen Stellungen gezeigt.

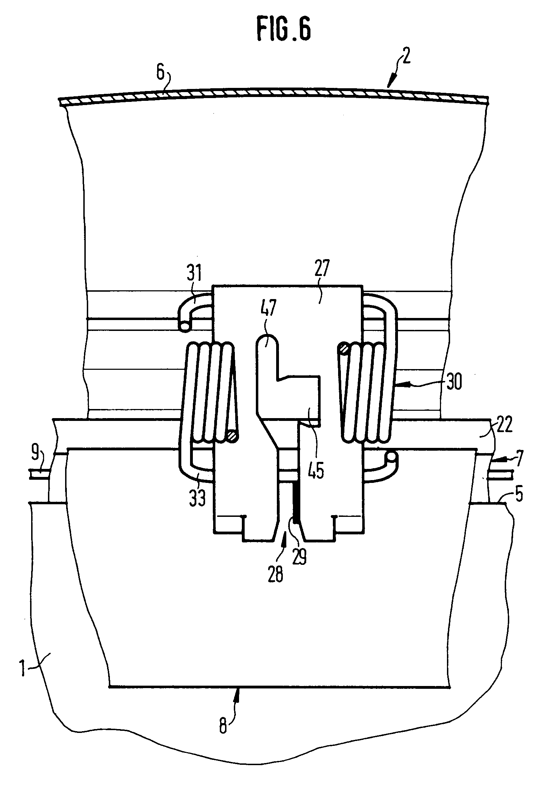

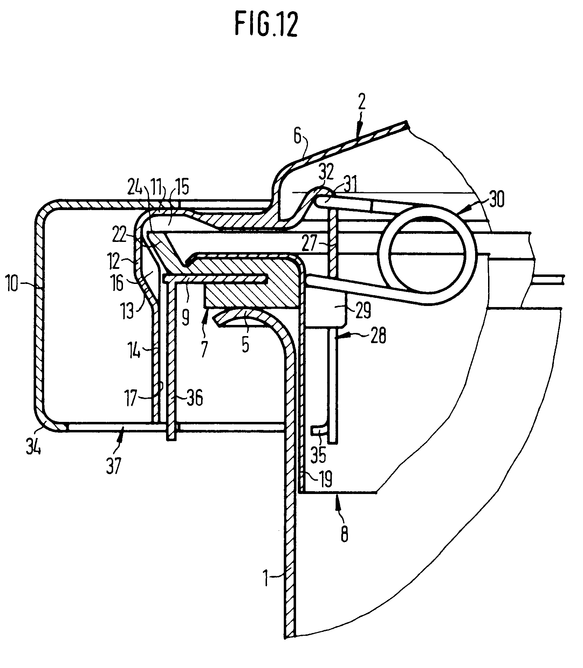

Wie beispielsweise aus den Figuren 5 und 6 hervorgeht, sind mit der Haube 6 fest verbundene und gleichmäßig am Umfang verteilte Kulissen 27 innen in der Haube 6 angebracht, die mit ihren unteren Enden in den Zentrierring 8 hineinreichen. Die Kulissen 27 weisen jeweils einen nach unten offenen Kulissenschlitz 28 auf, in welchem eine innen am Zentrierring 8 befestigte Nase 29 gefuhrt ist. Selbstverständlich entsprechen die Anzahl und die Umfangsverteilung der Nasen 29 am Zentrierring 8 der Anzahl und Umfangsverteilung der Kulissen 27 an der Haube 6. Jedem Kulissen- und Nasenpaar 27, 29 ist eine als Schraubendrehfeder ausgebildete Feder 30 zugeordnet, deren Enden etwa parallel zueinander und zur Federachse in entgegengesetzten Richtungen umgebogen sind. Das obere Federende 31 liegt einem oben an der Kulisse 27 befindlichen Widerlager 32 an, während sich das untere Federende 33 an der Nase 29 abstützt. Durch die mit Vorspannung angebrachten Federn 30 werden bei geschlossenem Dampfdruckkochtopf die Haube 6 und damit die Klammern 10 in Aufwärtsrichtung beaufschlagt, wodurch die unteren Schenkel 34 der Klammern 10 dem Schüttrand 5 von unten angedrückt werden. Zugleich beaufschlagen die Federn 30 den Zentrierring 8 und mit ihm den Dichtring 7 und den Stützring 9 in Abwärtsrichtung, wodurch die Dichtfläche 26 des Dichtrings 7 dem Schüttrand 5 angedrückt wird. Die Federn 30 haben die Tendenz, die Haube 6 und den Zentrierring 8 mit den daran befindlichen Teilen in entgegengesetzten Richtungen axial relativ zueinander zu verlagern. Sind die Haube 6 und der Zentrierring 8 mit den an ihm angebrachten Teilen voneinander getrennt, so verbleiben die Federn 30 an der Haube 6, wobei sich die unteren Federenden 33 jeweils an einem seitlichen Vorsprung 35 (z.B. Fig. 12) abstützen. Die Federn 30 weisen hierbei eine geringere Vorspannung auf, so daß sie leicht entfernt und angebracht werden können.

Tangential zwischen dem Schüttrand 5 und der zylindrischen Innenfläche 17 der Haube 6 sind mit dem Stützring 9 fest verbundene, nach unten weisende und über die Klammern 10 vorstehende Zungen 36 angeordnet (Fig. 5). Die Zungen 36 steuern im Zusammenspiel mit Führungsschlitzen 37, die in dem unteren Schenkel 34 der Klammern 10 vorgesehen sind und von den Zungen durchsetzt werden, die radial gerichteten AUF- und ZU-Bewegungen der Klammern 10. Für jede Klammer 10 sind zwei Zungen- und Führungsschlitzpaare 36, 37 vorgesehen, wie die Figuren 1, 3 und 7 verdeutlichen. Die Zungen- und Führungsschlitzpaare 36, 37 sind bezüglich radialer Symmetrieachsen der Klammern 10 spiegelbildlich angeordnet.

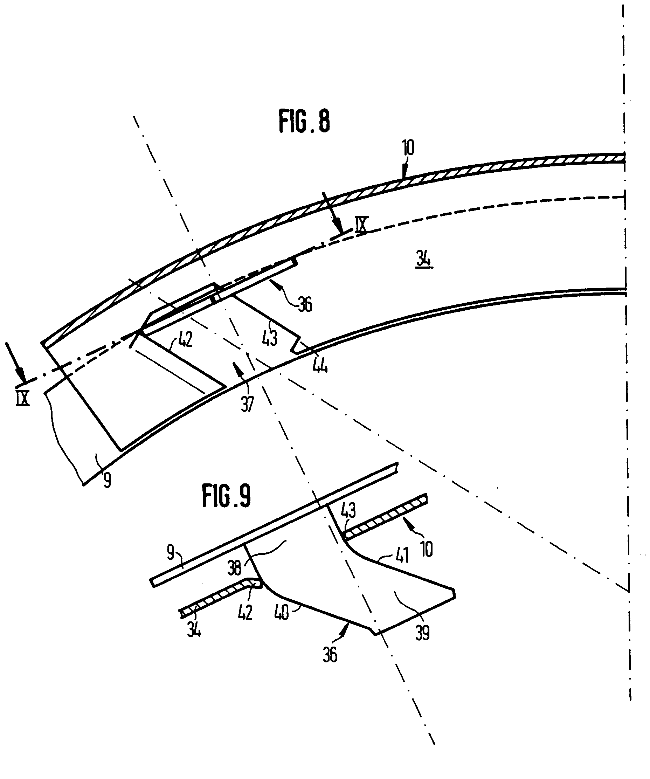

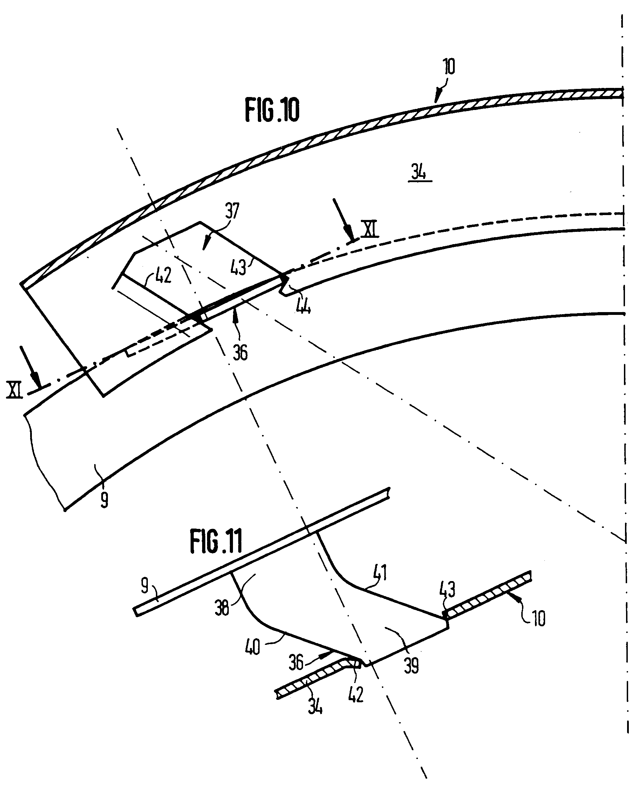

Zur Erläuterung der besonderen Formgebung der Zungen 36 und der Führungsschlitze 37 wird auf die Figuren 8 und 9 Bezug genommen. Die Zungen 36 sind tangential am Außenumfang des Stützrings 9 vorgesehene ebene Platten, die im Schnitt gemäß Fig. 5 gesehen senkrecht an den Stützring 9 angeschlossen sind. In der Blickrichtung gemäß Fig. 9 jedoch zeigen die Zungen 36 eine winkel förmige Gestalt, mit einem kürzeren senkrecht an den Stützring 9 anschließenden Schenkel 38 und einem gegenüber dem Schenkel 38 im gezeigten Beispiel unter 45° abgewinkelten längeren Schenkel 39. Die mit bogenförmigen Übergängen aneinander anschließenden Seitenkanten der Schenkel 38, 39 bilden Führungskanten 40 und 41, die parallel zueinander verschoben übereinstimmend sind, so daß das Quermaß der Zungen 36, d.h. die Abmessungen zwischen den Führungskanten 40, 41 parallel zum Stützring 9, an jeder Stelle gleich groß ist. Die längeren Schenkel 39 jeweils zweier mit einer Klammer 10 zusammenwirkenden Zungen 36 sind nach unten konvergierend zueinander angeordnet (Fig. 1).

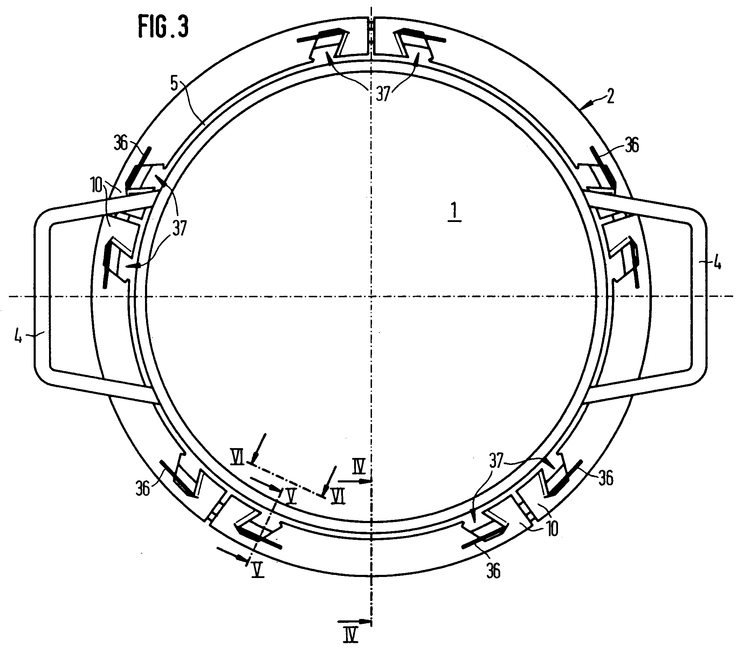

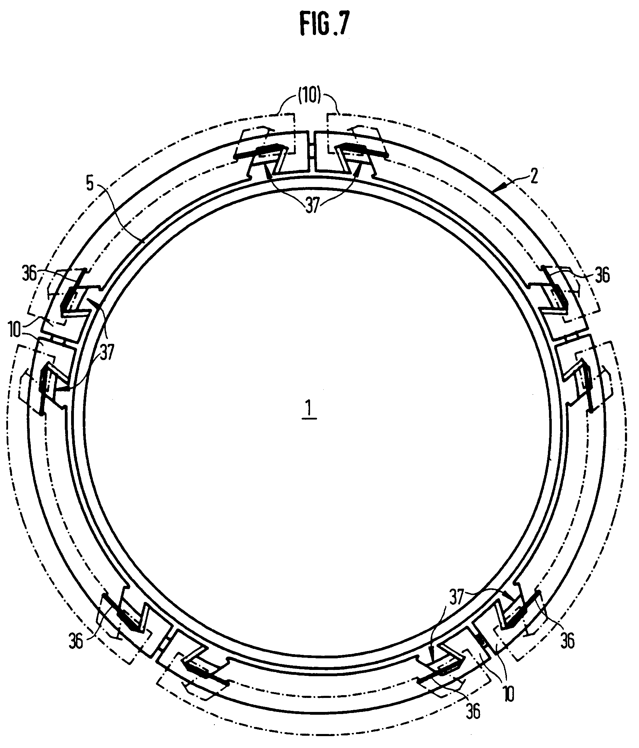

Die zugehörigen Führungsschlitze 37 in dem unteren Schenkel 34 jeder Klammer 10 sind Ausnehmungen mit jeweils zwei parallel zueinander verlaufenden Führungskanten 42 und 43, die bezüglich einer an der Stelle des Schlitzes 37 gedachten Radialachse schräg verlaufen. Der Abstand der Führungskanten 42 und 43 zueinander ist auf das vorerwähnte Quermaß der Zungen 36 abgestimmt, wie Fig. 9 verdeutlicht. Die Zungen 36 und die Führungsschlitze 37 wirken jeweils mit den Führungskantenpaaren 40, 42 und 41, 43 zusammen, wobei das Führungskantenpaar 40, 42 bei radialer Verlagerung der Klammer 10 in die ZU-Stellung und das Führungskantenpaar 41, 43 bei radialer Verlagerung der Klammer 10 in die AUF-Stellung aneinander gleitet. Die beiden Führungsschlitze 37 an jeder Klammer 10 sind bezüglich ihrer Schräglage so ausgerichtet, daß sie in Richtung des Krümmungsmittelpunkts der Klammer 10 zueinander konvergierend verlaufen (Fig. 3, 7).

Durch Keilwirkung erfolgt beim Eintauchen der Zungen 36 in die Führungsschlitze 37 eine radiale Verschiebung der Klammern 10 nach innen in die ZU-Stellung (Fig. 3), beim Austauchen hingegen eine Verschiebung nach außen in die AUF-Stellung (strichpunktierte Linien in Fig. 7). Dieses Zusammenspiel ist am besten in Fig. 7 dargestellt. Die Figuren 8 und 9 zeigen die Relativlage der Zungen 36 und Schlitze 37 in der ZU-Stellung, während die Figuren 10 und 11 die Zungen 36 und die Schlitze 37 in der der AUF-Stellung entsprechenden Endlage illustrieren. Am Ende der Verschiebebewegung in die AUF-Stellung schlägt ein die Führungskante 43 nach innen zu begrenzender Anschlag 44 an die Zunge 36 an, wie aus Fig. 10 hervorgeht.

Die Bewegungssteuerung der Klammern 10 aus der ZU-Stellung in die AUF-Stellung und umgekehrt kann auf verschiedene Weise erfolgen, ohne daß dabei die vorstehend beschriebene Konstruktion grundsätzlich geändert werden müßte. Die vorstehend beschriebene Anordnung stellt jedoch eine besonders vorteilhafte Ausbildung dar.

Nachstehend wird die Bedienung des vorstehend beschriebenen Dampfdruckkochtopfes erläutert. Zum Öffnen des Dampdruckkochtopfes muß der Griff 3 und damit die Haube 6 nach unten gedrückt werden. Dies ist nur möglich, wenn ein eventuell im Dampfdruckkochtopf vorhandener Überdruck vorher fast vollständig abgebaut wurde. Diese Notwendigkeit erläutert das folgende Beispiel. Bei einem Innendurchmesser des Topfes 1 von 22 cm besitzt die zylindrische Innenfläche 17 der Haube 2 einen Durchmesser von etwa 25 cm. Bei einem Betriebsdruck von 0,8 bar wirkt gegen die zum Öffnen erforderliche Betätigungsrichtung eine Kraft von 4000 N. Unter der Annahme, daß die gesamte Kraft der Federn 30 etwa 30 N beträgt, ergibt sich, daß der Innendruck auf weniger als 0,015 bar abgebaut werden muß, damit der Deckel 2 mit einer noch zumutbaren Kraft von 100 N geöffnet werden kann.

Wird beim Öffnungsvorgang der Griff 3 und mit ihm die Haube 6, die Kulissen 27 und die Klammern 10 ausgehend von der ZU-Stellung gemäß der Figuren 5 und 6 nach unten gedrückt, ändert sich die Relativlage von Topf 1 und Deckel 2 dahingehend, daß der Topf 1 und mit ihm der Schüttrand 5, der Zentrierring 8 mit den Nasen 29, der Dichtring 7 und der Stützring 9 in die Haube 6 eingetaucht erscheint. Sobald hierbei die Dichtkante 24 die zylindrische Innenfläche 17 verläßt, trifft sie auf die Stege 16, wodurch sie wenigstens im Bereich der Stege 16 daran gehindert wird, sich infolge des gummielastischen Verhaltens der Dichtlippe 22 an die Innenwandflächen des Übergangsabschnitts 13 und des Wandabschnitts 12 dicht anzulegen. Dadurch wird die Dichtwirkung der Dichtlippe 22 aufgehoben und ein eventuell im Dampfdruckkochtopf noch vorhandener Restdruck vollständig abgebaut.

Während dieser anfänglichen Abwärtsverlagerung des Deckels 2 relativ zum Topf 1 verschieben sich die Zungen 36 in den Führungsschlitzen 37 nur etwa im Bereich der kürzeren Schenkel 38, so daß eine wesentliche Radialverlagerung der Klammern 16 nach aussen noch nicht erfolgt. Erst wenn die Abdichtwirkung der Dichtlippe 22 aufgehoben ist, bewirkt ein weiteres Austauchen der Zungen 36 aus den Führungsschlitzen 37 infolge des Eingriffs der längeren Schenkel 39 der Zungen 36 mit den Führungsschlitzen 37 eine zunehmende radiale Verlagerung der Klammern 10 nach außen in die AUF-Stellung entsprechend der Fig. 12. Dadurch wird sichergestellt, daß die Klammern 10 erst dann beginnen, den Schüttrand 5 des Topfes 1 freizugeben, wenn kein Überdruck mehr im Dampfdruckkochtopf vorhanden ist.

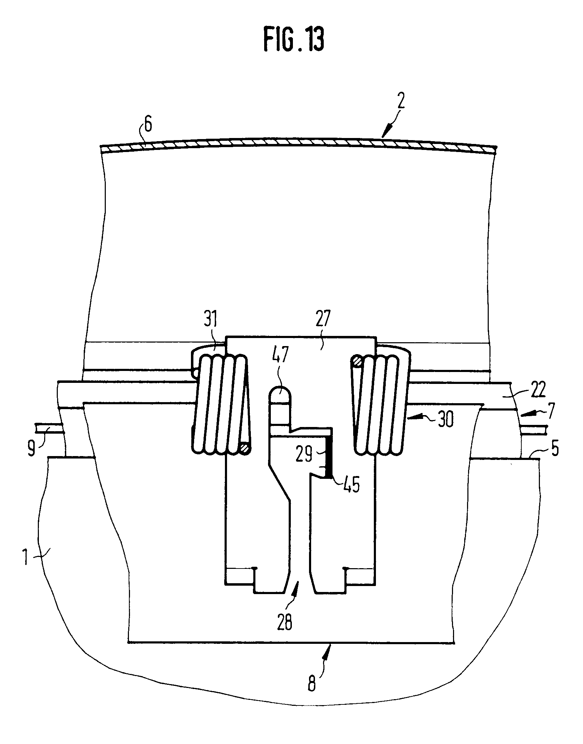

Während des Öffnungsvorgangs gleiten die Nasen 29 ausgehend von der in Fig. 6 gezeigten Stellung in den Kulissenschlitzen 28. Sobald sie die der AUF-Stellung entsprechende Lage etwa gemäß Fig. 13 erreicht haben, klinken sie unterstützt durch die Querkraft der Federn 30 in Sperrausnehmungen 45 der Kulissenschlitze 28 ein. Der Deckel 2 ist nun in der AUF-Stellung fixiert (Fig. 12, 13) und kann vom Topf 1 abgehoben werden.

Zum Schließen des Dampfdruckkochtopfes wird zunächst der Deckel 2 auf den Topf 1 aufgesetzt, wobei der Zentrierring 8 das Auffinden der richtigen Lage erleichtert. Dann wird der Griff 3 und damit die Kulissen 27 gegenüber dem Zentrierring 8 und den Nasen 29 gegen die Querkraft der Federn 30 geringfügig gedreht, wodurch die Nasen 29 aus den Sperrausnehmungen 45 austreten. Durch die Kraft der Federn 30 angetrieben schnappt jetzt der Deckel 2 ohne weiteres Zutun der Bedienungsperson in die ZU-Stellung gemäß der Figuren 5 und 6.

Aufgrund der beschriebenen Ausbildung der Zungen 36 werden hierbei die Klammern 10 zunächst radial einwärts in die ZU-Stellung verlagert, bevor die Dichtkante 24 der Dichtlippe 22 ihre Dichtwirkung an der zylindrischen Innenfläche 17 der Haube 6 wiedererhält. Damit ist sichergestellt, daß sich im Dampfdruckkochtopf nur dann ein Überdruck aufbauen kann, wenn die Klammern 10 die Haube 6 und den Schüttrand 5 vollständig umgreifen und sich der Dampfdruckkochtopf in definierter ZU-Stellung befindet (Fig. 5,6).

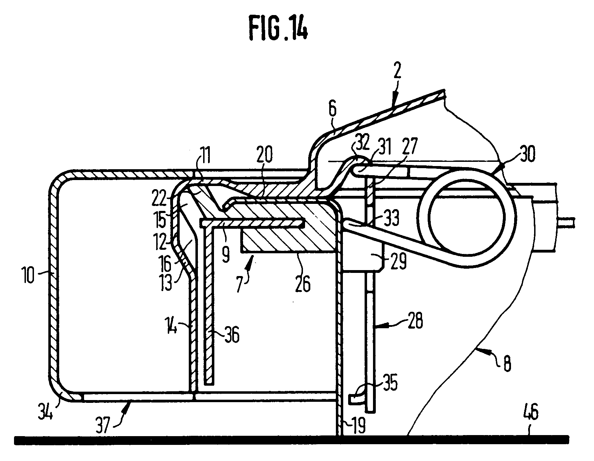

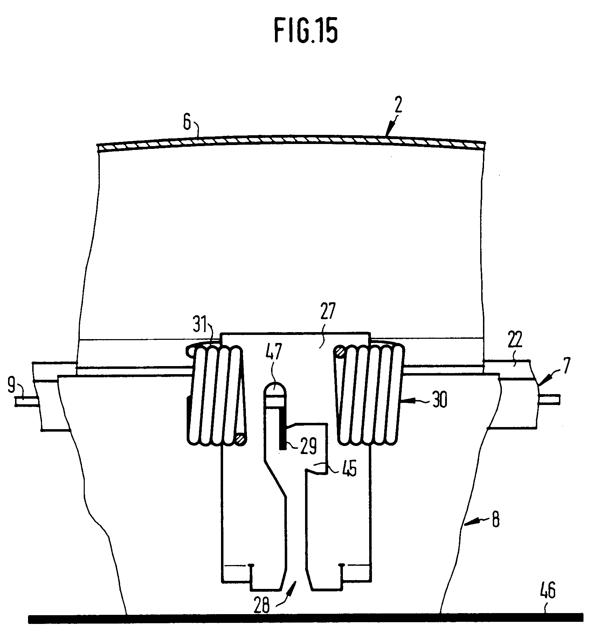

Zur Erläuterung des Zerlegens des Deckels 2 wird jetzt auf die Figuren 14 bis 17 Bezug genommen. Zum Zerlegen wird der Deckel 2 auf eine in den Figuren 14 und 15 angedeutete feste ebene Fläche 46 mit dem unteren Rand des Zentrierrings 8 aufgesetzt. Hierbei nehmen die Teile des Deckels die in den Figuren 12 und 13 gezeigte Position ein. Der Griff 3 wird jetzt bei gleichzeitigem Drehen entgegen der Querkraft der Federn 30 nach unten gedrückt, wodurch die Nasen 29 aus den Sperrausnehmungen 45 austreten und in den Kulissenschlitzen 28 nach oben gleiten, wo sie in Endausnehmungen 47 der Kulissenschlitze 28 eintreten. Vor Erreichen eines Endanschlags berührt die Dichtlippe 22 die ebene Innenfläche des Auflagerandes 11 (Fig. 14). Will man jetzt Griff 3 und Haube 6 weiter nach unten drücken, muß die Dichtlippe 22 über ihren ganzen Umfang elastisch verformt werden, wofür eine beträchtlich erhöhte Kraft aufgebracht werden muß. Dadurch wird verhindert, daß Griff 3 und Haube 6 unbeabsichtigt bis zum Anschlag in die Zerlegestellung gedrückt werden.

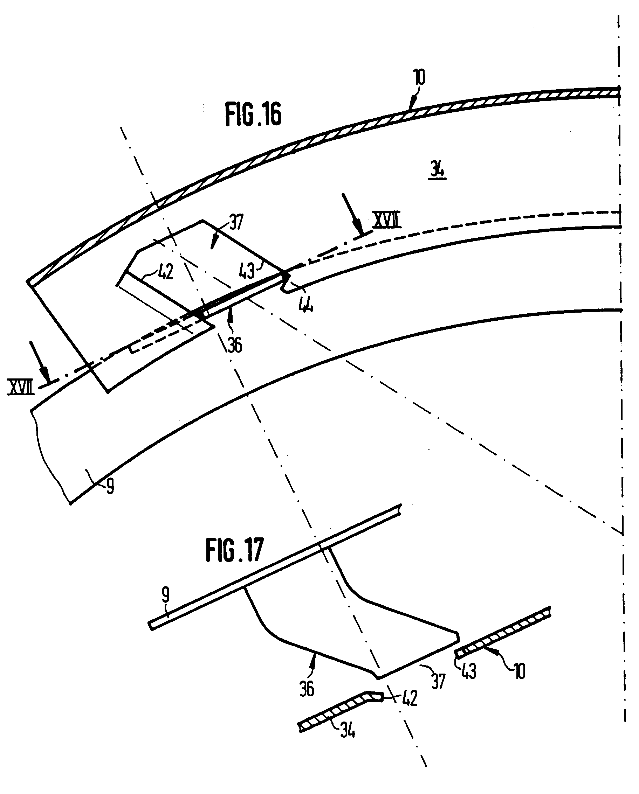

In der Zerlegestellung sind die Zungen 36 vollständig aus den Führungsschlitzen 37 ausgetreten, wie die Figuren 16 und 17 verdeutlichen. Die Klammern 10 können jetzt radial nach außen abgezogen werden, wobei selbstverständlich Griff 3 und Haube 6 weiterhin nach unten gedrückt bleiben. Dann können der Zentrierring 8, der Dichtring 7 und der Stützring 9 von den Federn 30 ausgeschoben nach unten entnommen werden. Der Dichtring 7 kann vom Stützring 9 durch Ausknöpfen getrennt werden. Die jetzt entlasteten Federn 30 können gewünschtenfalls ausgehängt werden. Der Zusammenbau des Deckels 2 erfolgt sinngemäß in umgekehrter Reihenfolge.

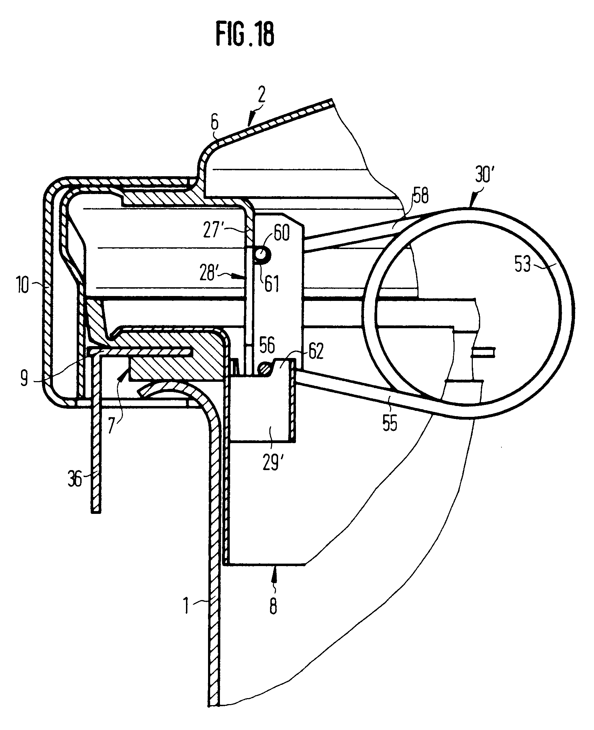

Zur Erläuterung der anderen Ausführungsform der miteinander eingreifenden Elemente von Zentrierring 8 und Haube 2 wird nunmehr auf die Figuren 18 bis 23 Bezug genommen, wobei gleiche oder entsprechende Teile mit den vorstehend verwendeten Bezugszahlen, ggf. ergänzt durch einen Indexstrich, bezeichnet sind.

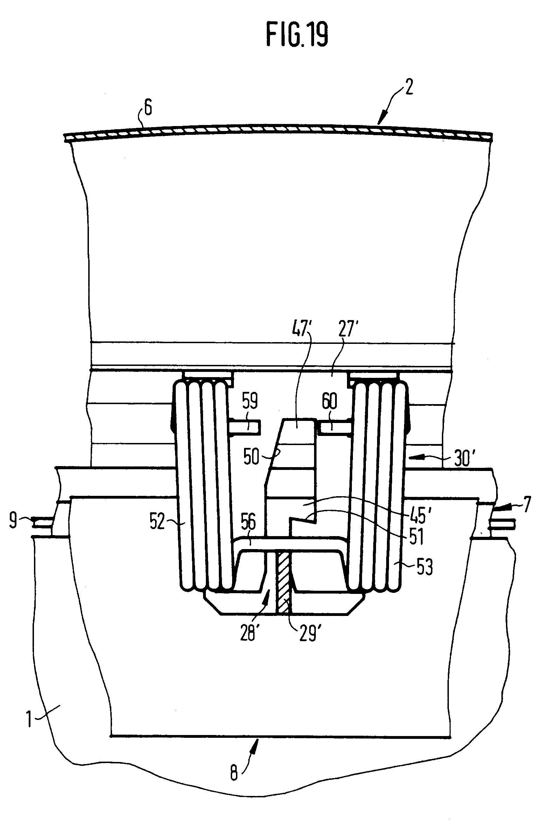

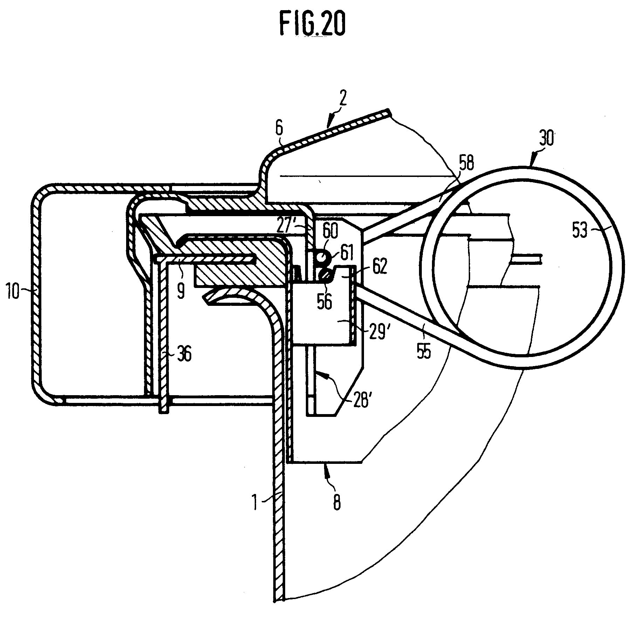

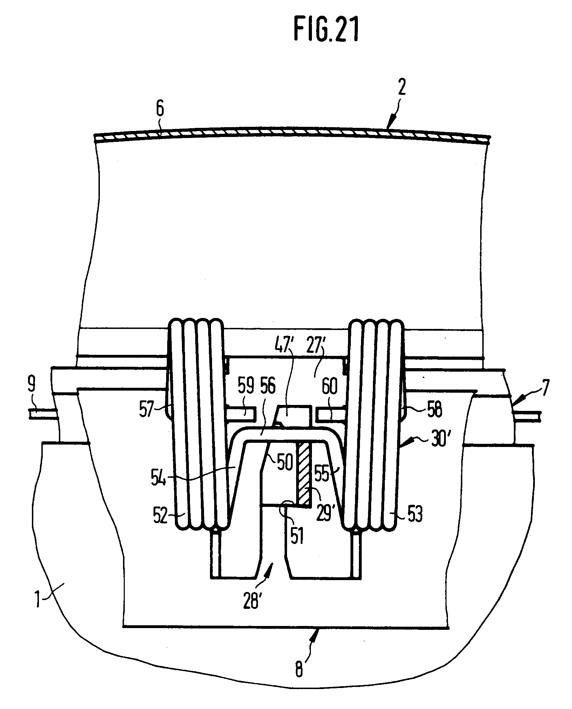

Wie aus den Figuren 19, 21 und 23 hervorgeht, weisen die Kulissenschlitze 28' einen der Sperrausnehmung 45' gegenüberliegenden schräg verlaufenden Wandabschnitt 50 auf. Bei der von der Schließstellung gemäß der Figuren 18 und 19 ausgehenden abwärts gerichteten Öffnungsverlagerung der Haube 5 trifft dieser Wandabschnitt 50 auf die Nase 29' auf, wodurch zwischen Haube 5 und Zentrierring 8 eine kleine Drehverlagerung bei fortgesetzter Abwärtsbewegung der Haube erzwungen wird, bis entsprechend den Figuren 20 und 21 die Nase 29' in die Sperrausnehmung 45' eingerastet ist. Eine die Sperrausnehmung 45' unten begrenzende Schrägfläche 51 (Fig. 19) erleichtert, ähnlich wie bei der vorstehend beschriebenen Ausführungsform, den Verrastungsvorgang.

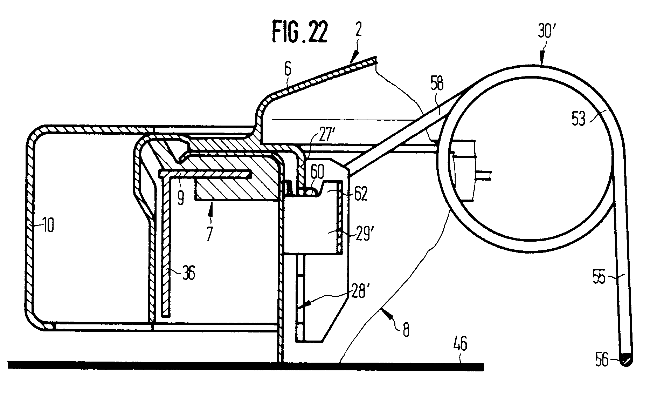

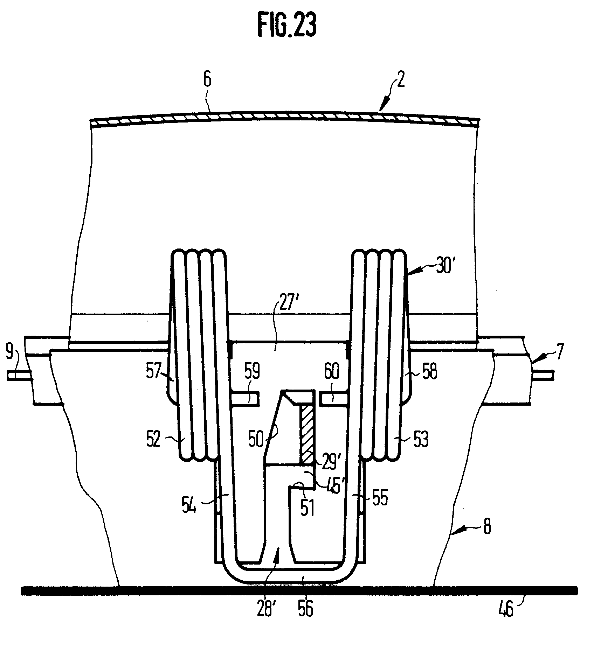

Bei dieser Ausführungsform können die in den Figuren 18 bis 23 dargestellten modifizierten Federn 30' zum Einsatz gelangen. Diese sind jeweils aus zwei mit Abstand zueinander und gleichachsig nebeneinander angeordnete Schraubendrehfedern 52 und 53 aufgebaut. Die Schraubendrehfedern weisen einen entgegengesetzten Windungssinn auf. Ihre inneren gegenüberliegenden Federschenkel 54 und 55 (Fig. 21) sind durch eine parallel zur Achse der Schraubendrehfedern 52, 53 verlaufende Drahtbrücke 56 zu einer einteiligen Feder 30' verbunden. Die Feder 30' ist mit Vorspannung einerseits mittels der Drahtbrücke 56 an der Nase 29' und andererseits über ihre äußeren Federschenkel 57 und 58 an gegenüberliegenden Stellen an der Kulisse 27' abgestützt. Zu diesem Zweck sind die Enden 59 bzw. 60 der Federschenkel 57, 58 zueinander umgebogen und in Lagerbohrungen 61 der Kulisse 27' eingehängt. Auf diese Weise verbleiben die Federn 30' bei zerlegtem Deckel an der Haube 6, während die Drahtbrücke 56 über einen nach oben gerichteten Vorsprung 62 der Nase 29' hinweg vom Zentrierring 8 leicht entkuppelt werden kann (Fig. 22, 23). Der Vorsprung 62 sichert sowohl in der Schließstellung (Fig. 18, 19) als auch in der Öffnungsstellung (Fig. 20, 21) den Angriff der Federn 30' an die Nasen 29'.

Wie die Figuren 18 und 20 verdeutlichen, sind - in Achsrichtung der Schraubendrehfedern 52, 53 gesehen - die inneren Federschenkel 54, 55 und die äußeren Federschenkel 57, 58 ausgehend vom Umfang der Schraubendrehfedern in Richtung auf die zugehörige Kulisse 27' zueinander konvergierend gerichtet, und zwar über den gesamten Bewegungsbereich von der Schließstellung (Fig. 18) zu der verrasteten Öffnungsstellung (Fig. 20). Hierdurch wird eine für die Bedienung des Dampfdruckkochtopfs besonders geeignete Federcharakteristik erzielt.

Schließen und Öffnen des Dampfdruckkochtopfs sowie Zerlegen und Zusammenbauen des Deckels erfolgen auch bei dieser Ausführungsform wie weiter vorn beschrieben.

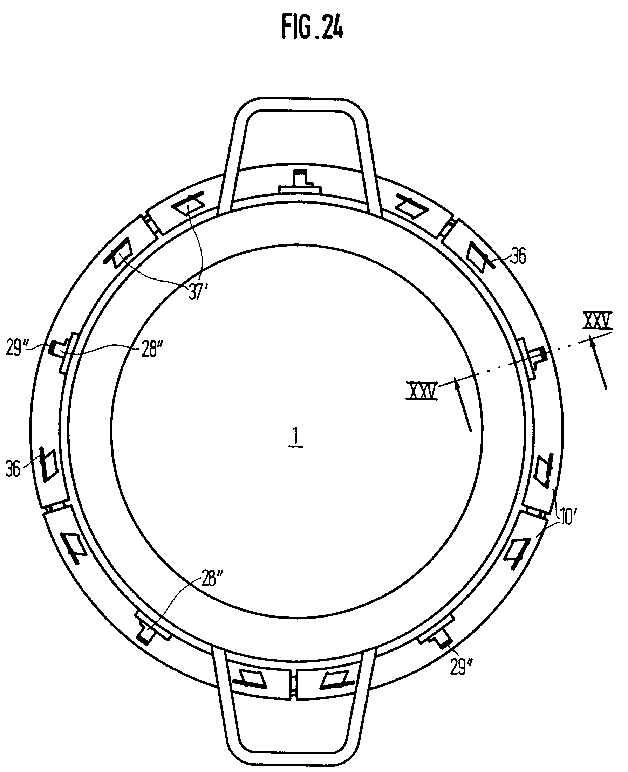

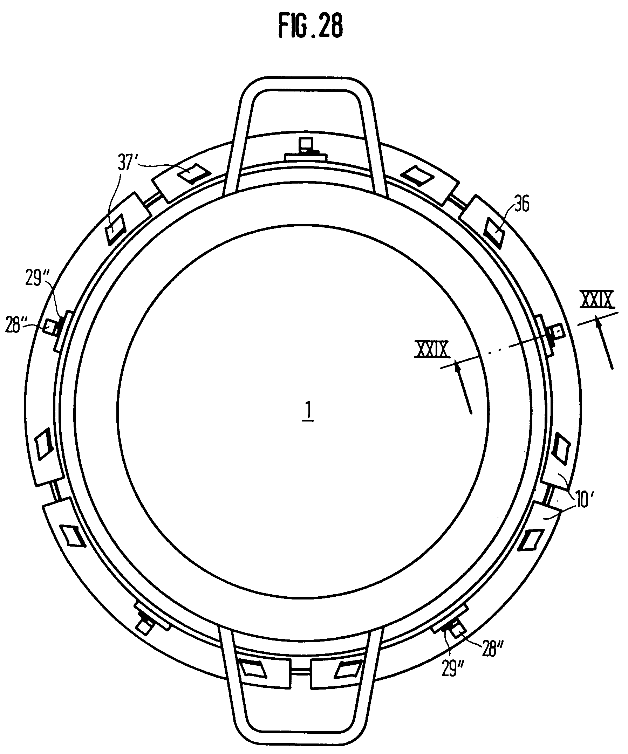

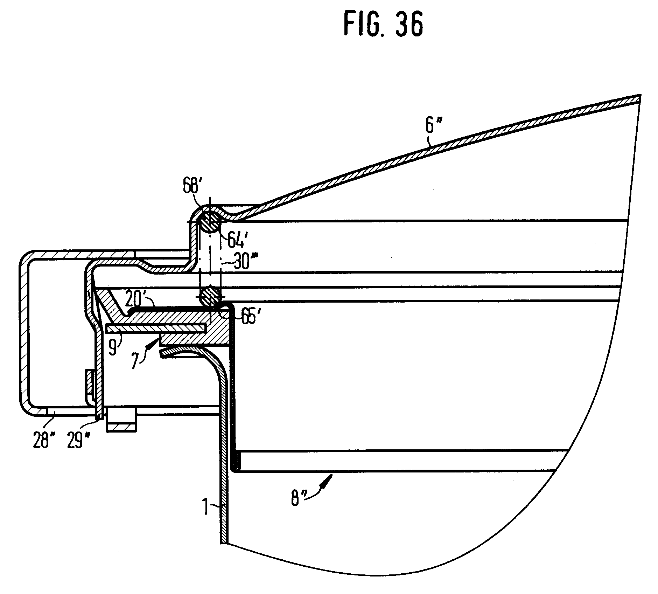

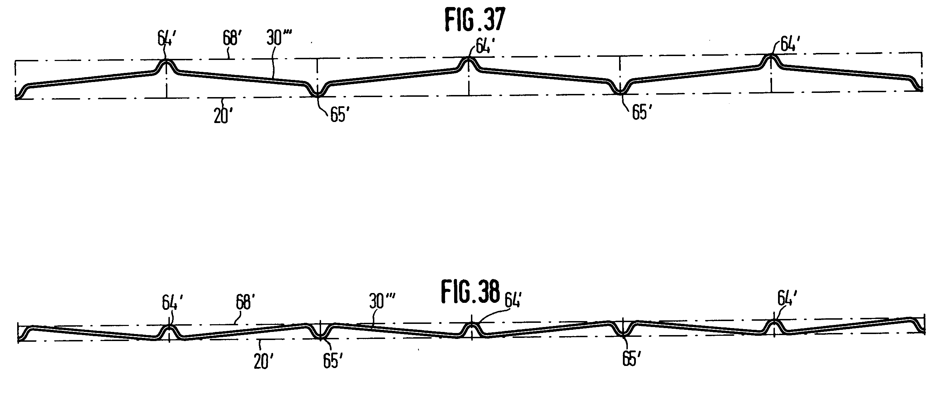

Zur Erläuterung der weiteren Ausführungsform des Dampfdruckkochtopfs wird nunmehr auf die Fig. 24 bis 38 Bezug genommen, wobei gleiche oder entsprechende Teile mit den vorstehend verwendeten Bezugszahlen, ggf. ergänzt durch einen, ggf. durch zwei oder drei Indexstriche, bezeichnet sind. Die weitere Ausführungsform unterscheidet sich von der vorstehend beschriebenen Ausführungsform im wesentlichen durch eine vorteilhafte Verlagerung der die Öffnungsstellung verrastenden Elemente aus dem Innenraum des Deckels an die Deckelaußenseite und durch eine vereinfachte Ausbildung und Anordnung der die Deckelhaube und den Zentrierring in Abdichtrichtung beaufschlagenden Federn.

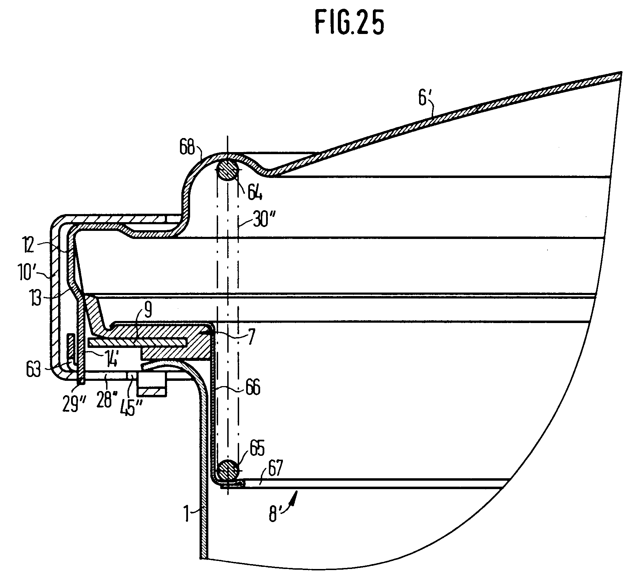

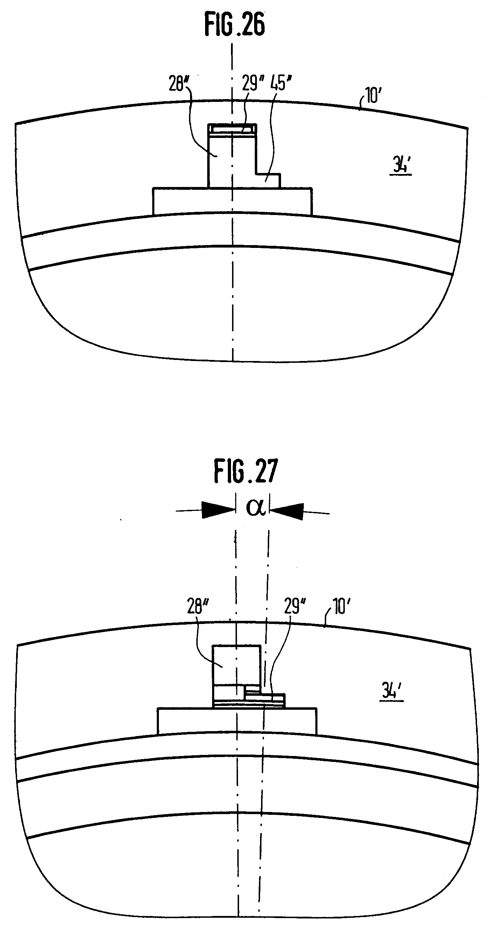

Wie beispielsweise aus Fig. 24 und 25 hervorgeht, sind in derselben Anzahl wie die Klammern 10' an der Unterkante 63 der Umfangswand der Haube 6' gleichmäßig über den Umfang verteilt nach unten weisende Nasen 29'' angebracht. Während des Öffnungsvorgangs gleiten die Nasen 29'', ausgehend von der in Fig. 26 gezeigten Stellung in Kulissenschlitzen 28'', die sich im unteren Schenkel 34' der zugehörigen Klammern 10' befinden. Genauer gesagt, die Klammern 10' gleiten mit ihren Kulissenschlitzen 28'' an den relativ dazu ortsfesten Nasen 29''. Sobald sie die der AUF-Stellung entsprechende Lage etwa gemäß Fig. 27 erreicht haben, klinken sie durch Drehung des Griffes 3, und damit der Haube 6', um den kleinen Winkel α in die Sperrausnehmungen 45'' der Kulissenschlitze 28'' ein. Der Deckel ist nun in der AUF-Stellung fixiert (Fig. 27, 28 und 29).

Zum Schließen des Deckels wird die Haube 6' um den Winkel α zurückgedreht, wobei die Nasen 29'' aus den Sperrausnehmungen 45'' austreten. Das Weitere erfolgt in der bereits beschriebenen Weise.

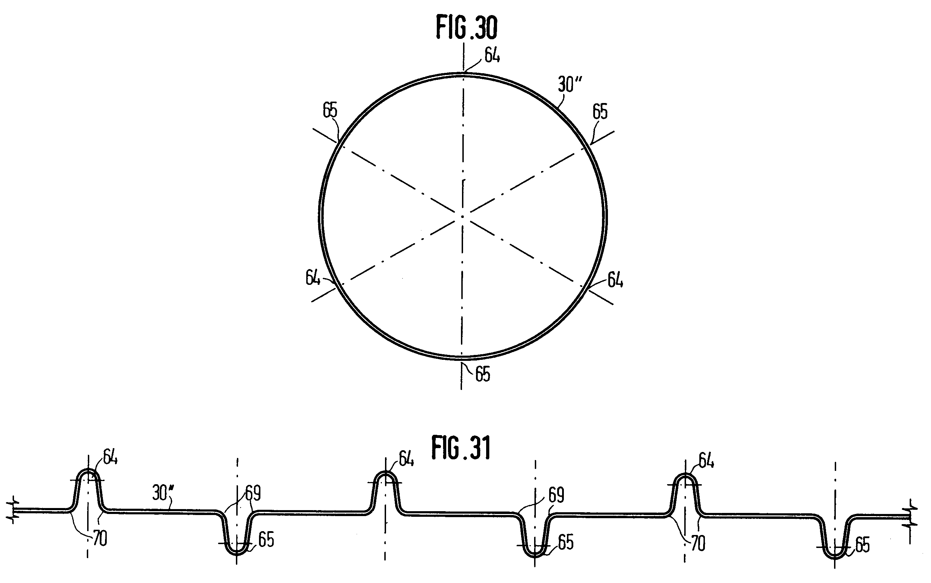

Die Feder 30'', die den Schließvorgang antreibt, ist in Fig. 30 und 31 in ungespannter Lage dargestellt. Sie ist als geteilter oder geschlossener Ring aus Federstahldraht ausgebildet und weist parallel zu ihrer Mittenachse in abwechselnder Richtung über den Umfang gleichmäßig verteilte Ausbuchtungen 64 und 65 auf.

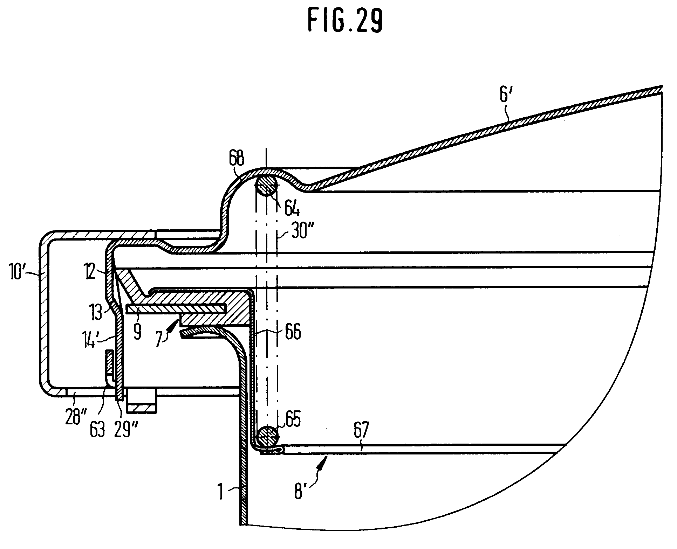

Wie beispielsweise aus Fig. 29 hervorgeht, ist die Feder 30'' koaxial zu der zylindrischen Innenfläche 66 des Zentrierrings 8' angeordnet. Die nach unten weisenden Ausbuchtungen 65 liegen auf einem nach innen weisenden Flansch 67 des Zentrierrings 8' auf. Die nach oben weisenden Ausbuchtungen 64 liegen in einer in der Haube 6' umlaufenden Sicke 68 auf. Flansch 67 und Sicke 68 bilden somit die Widerlager der Feder 30''.

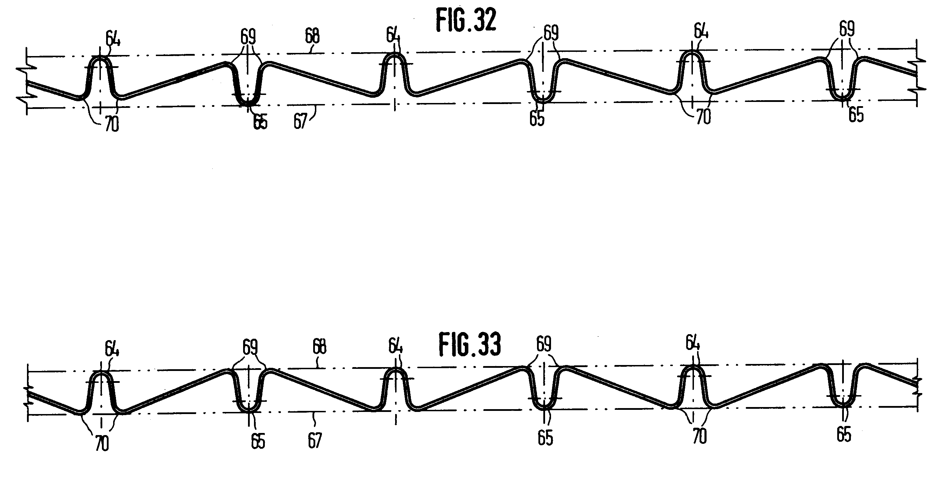

Fig. 25 und 32 zeigen die Feder 30'' in vorgespannter Lage, die der ZU-Stellung des Deckels entspricht. Fig. 29 und 33 zeigen die Feder 30'' in blockgespannter Lage, die der AUF-Stellung des Deckels entspricht. Die Block-Lage der Feder 30'' ergibt sich durch das gleichzeitige Aufliegen der Ausbuchtungen 64 und 65 und der Fußrundungen 69 und 70 auf die entsprechenden Widerlager, d.h. auf den Flansch 67 bzw. die Sicke 68.

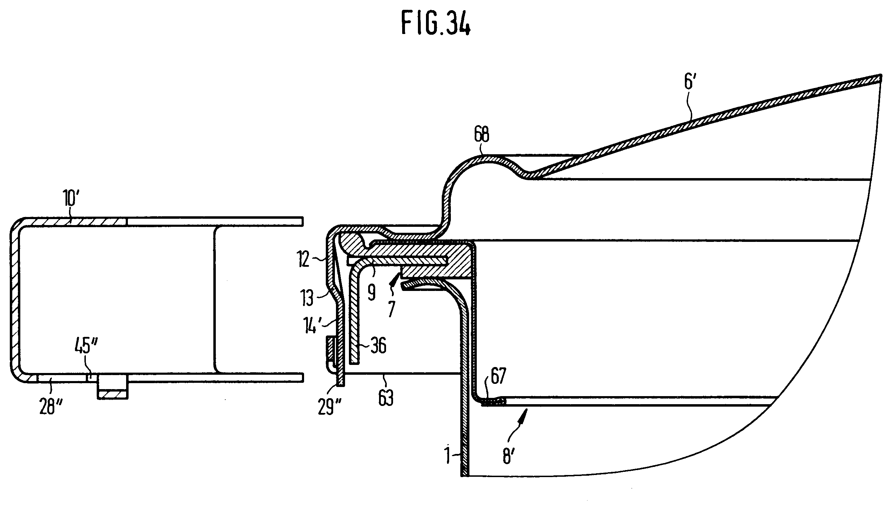

Zum Zerlegen des Deckels muß zunächst die Feder 30'', indem sie elastisch verformt wird, nach innen über den Flansch 67 hinweg ausgebaut werden. Erst dann kann die Haube 6' bis zum Anschlag nach unten gedrückt und die Klammern 10' radial nach außen abgezogen werden. Das weitere Zerlegen, wie auch der Zusammenbau, erfolgen sinngemäß wie bereits beschrieben. Fig. 34 zeigt, daß der Deckel zum Zerlegen, anstatt wie vorstehend beschrieben auf eine ebene Platte, auch auf den Topf 1 aufgesetzt werden kann.

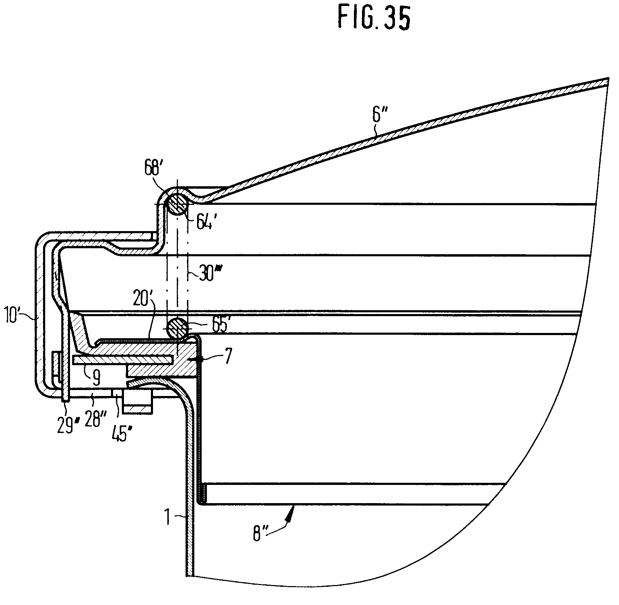

Die Fig. 35 bis 38 zeigen eine modifizierte Ausführungsform des Dampfdruckkochtopfs mit einer Federvariante. Die Feder 30''' weist gegenüber der Feder 30'' eine geringere Höhe auf und stützt sich an Widerlagern ab, die sich im Vergleich mit der in Fig. 25, 29 und 34 gezeigten Anordnung bezüglich der Topfmittenachse radial weiter außen befinden. Die Widerlager werden hierbei einerseits von der in der Haube 6'' befindlichen Sicke 68' und andererseits von dem Flansch 20' des Zentrierrings 8'' gebildet.

## Claims

1. Steam pressure cooker comprising
a top-open cooker (1) with an all-round, uniform edge (5) passing round its opening,
a multipart lid (2), which can be engaged on the edge (5), accompanied by the interposing of a sealing ring (7) sealing as a result of the internal pressure and which has a dome (6) concentric to the centre axis of the cooker and the lid and to which are fitted a grip (3) and a pressure limiting, safety, evaporating steam and vent valve arrangement,
a closure mechanism, whose clips (10) engaging round the edges (5, 11) of the cooker (1) and the dome (6) in the closed position and freeing the edge (5) of the cooker (1) in the open position are controlled in their radially inwardly or outwardly directed displacement movements by movements of the dome (6) relative to the cooker (1) and
an angle profile ring forming part of the lid (2), positioned concentrically to the dome (6), holding the sealing ring (7) and with respect to which the dome (6) is axially displaceable for removing or bringing about a seal between said dome (6) and the profile ring, wherein the dome (6) and the angle profile ring being urged by spring tension in the sealing direction, and locking members (29, 45) between the dome (6) and the angle profile ring, operated by relative movements between said elements, the removal of the sealing action between the dome and the angle profile ring alternatively fixing or enabling the sealing,
**characterized in that**
the dome (6) engages over the edge (5) of the cooker (1) with a downwardly directed circumferential wall (12, 13, 14) with a radial spacing, which in the lower region (cylindrical section 14) is provided with a cylindrical inner surface (17), on which a sealing lip (22) of the sealing ring (7) urged by the internal pressure is axially displaceable, and which in the upper region (wall section 12) is constructed for eliminating the sealing engagement of the sealing lip (22),
the angle profile ring is constructed as a centering ring (8) by a hollow cylindrical wall (19) engaging in the cooker (1), which with a radially outwardly extending flange (20) terminating in spaced manner from the cylindrical inner surface (17) engages the sealing ring (7) from the top, which is supported with its inner surface on the hollow cylindrical wall (19) of the centering ring (8),
to the sealing ring (7) are fixed downwardly directed closure elements (tongues 36), which project downwards through the radial spacing between the circumferential wall (12, 13, 14) of the dome (6) and the edge (5) of the cooker (1) and engage with guide elements (guide slots 37) of the clips (10) for the radial displacement thereof,
the clips (10) are axially non-displaceable with respect to the dome (6) and
the centering ring (8) and the dome (6) are axially displaceably guided on one another by interengaging elements (links 27, 27', noses 29, 29') and can be locked in the open position, wherein between the centering ring (8) and the dome (6) springs (30, 30') are provided, which are increasingly tensioned during the axial approach of the centering ring and the dome.

2. Steam pressure cooker comprising
a top-open cooker (1) with an all-round, uniform edge (5) passing round its opening,
a multipart lid (2), which can be engaged on the edge (5), accompanied by the interposing of a sealing ring (7) sealing as a result of the internal pressure and which has a dome (6', 6'') concentric to the centre axis of the cooker and the lid and to which are fitted a grip (3) and a pressure limiting, safety, evaporating steam and vent valve arrangement,
a closure mechanism, whose clips (10') engaging round the edges (5, 11) of the cooker (1) and the dome (6', 6'') in the closed position and freeing the edge (5) of the cooker (1) in the open position are controlled in their radially inwardly or outwardly directed displacement movements by movements of the dome (6', 6'') relative to the cooker (1) and
an angle profile ring forming part of the lid (2), positioned concentrically to the dome (6', 6''), holding the sealing ring (7), and with respect to which the dome (6', 6'') is axially displaceable for removing or bringing about a seal between said dome (6', 6'') and the profile ring, wherein the dome (6', 6'') and the angle profile ring being urged by spring tension in the sealing direction, and locking members (29'', 45'') between the dome (6', 6'') and the angle profile ring operated by relative movements between said elements, the removal of the sealing action between the dome and the angle profile ring alternatively fixing or enabling the sealing,
**characterized in that**
the dome (6', 6'') engages over the edge (5) of the cooker (1) with a downwardly directed circumferential wall (12, 13, 14') with a radial spacing, which in the lower region (cylindrical section 14') is provided with a cylindrical inner surface (17), on which a sealing lip (22) of the sealing ring (7) urged by the internal pressure is axially displaceable and which in the upper region (wall section 12) is constructed for eliminating the sealing engagement of the sealing lip (22),
the angle profile ring is constructed as a centering ring (8', 8'') by a hollow cylindrical wall (19) engaging in the cooker (1), which with a radially outwardly extending flange (20) terminating in spaced manner from the cylindrical inner surface (17) engages the sealing ring (7) from the top, which is supported with its inner surface on the hollow cylindrical wall (19) of the centering ring (8', 8''),
to the sealing ring (7) are fixed downwardly directed closure elements (tongues 36), which project downwards through the radial spacing between the circumferential wall (12, 13, 14') of the dome (6', 6'') and the edge (5) of the cooker (1) and engage with guide elements (guide slots 37) of the clips (10') for the radial displacement thereof,
the clips (10') are axially non-displaceable with respect to the dome (6', 6'') and
the clips (10') and the dome (6', 6'') are radially displaceably guided on one another by interengaging elements (links 27'', noses 29'') and are lockable in the open position, wherein between the centering ring (8', 8'') and the dome (6', 6'') are provided springs (30'', 30''') increasingly tensioned during the axial approach of the centering ring and the dome.

3. Steam pressure cooker according to claim 1 or 2, **characterized in that** the upper region (wall sections 12, 13) of the circumferential wall (12, 13, 14) of the dome (6) is given a larger diameter for forming an enlargement (15) compared with the cylindrical inner surface (17) of its lower region (cylindrical section 14), wherein at least one web (16) connected in aligned manner to the cylindrical inner surface (17) extends into the enlargement (15).

4. Steam pressure cooker according to any one of the claims 1 to 3, **characterized in that** the sealing lip (22) of the sealing ring (7) extends upwards through the radial spacing between the flange (20) of the centering ring (8) and the cylindrical inner surface (17) and circumferentially tightly engages the cylindrical inner surface (17) with a sealing edge (24) in the closed position and has an inner surface (25) exposed to the internal pressure.

5. Steam pressure cooker according to any one of the claims 1 to 4, **characterized in that** the sealing ring (7) has an external circumferential groove in which is inserted a supporting ring (9), whose external circumference has a smaller diameter than the cylindrical inner surface (17) and which supports the sealing lip (22) from below.

6. Steam pressure cooker according to any one of the claims 1, 2 and 5, **characterized in that** the downwardly directed closure elements (tongues 36) are fixed to the supporting ring (9).

7. Steam pressure cooker according to any one of the claims 1 to 6, **characterized in that** the closure elements are constructed as plate-like, planar tongues (36) oriented tangentially to the dome circumference and are provided in pairs for each clip (10) and in each case have a longer leg (39) which is bent to the side and which displaceably engages in an inclined guide slot (37) in the lower leg (34) of the U-shaped profiled, associated clip (10), wherein the longer legs (39) of each tongue pair associated with a clip (10) converge downwards towards one another, whereas the two associated guide slots (37) of the clip (10) are oriented in inwardly converging manner with respect to the cooker axis.

8. Steam pressure cooker according to any one of the claims 1 to 7, **characterized in that** the reciprocal spacing of the leg inner surfaces of the clips (10) correspond to the height of the circumferential wall (12, 13, 14) of the dome (6), whilst incorporating a motion clearance.

9. Steam pressure cooker according to any one of the claims 1 and 3 to 7, **characterized in that** fixed internally to the dome (6) and in circumferentially distributed manner are provided several downwardly directed links (27, 27') extending into the centering ring (8) and whose downwardly open link slots (28, 28') in each case receive a nose (29, 29') fixed to the inner surface of the hollow cylindrical wall (19) of the centering ring (8), wherein within each link slot (28, 28') is provided a locking recess (45, 45'), in which the associated nose (29, 29') is locked in the open position.

10. Steam pressure cooker according to any one of the claims 1 and 9, **characterized in that** the link slots (28) in the links (27) terminate at the top in each case with an end recess (47, 47') in which the associated nose (29, 29') has been entered, if the dome (6) is axially displaced with respect to the centering ring (8) for the disassembly of the lid until the tongues (36) pass out of the guide slots (37) counter to the elastic resistance of the sealing lip (22), wherein the clips (10) being radially outwardly withdrawable after the tongues (36) have left the slots (37).

11. Steam pressure cooker according to claim 9 or 10, **characterized in that** on each link (27) is provided a spring (30) constructed as a helical torsion spring, whose ends (31, 33) are supported with pretension on the one hand on the link (27) and on the other on the associated nose (29).

12. Steam pressure cooker according to any one of the claims 9 to 11, **characterized in that** the locking of the noses (29) in the locking recesses (45) of the link slots (28) is assisted by the transverse tension produced by the springs (30), which acts counter to the oppositely directed unlocking.

13. Steam pressure cooker according to claim 9 or 10, **characterized in that** the link slots (28') have in each case an inclined wall portion (50) facing the locking recess (45'), which encounters the associated nose (29') during the opening displacement of the dome (5) and brings about a small rotative displacement between the dome (5) and the centering ring (8) until the nose (29') engages in the locking recess (45').

14. Steam pressure cooker according to claims 11 and 13, **characterized in that** on each link (27') is provided a spring (30') comprising two spaced, equiaxially juxtaposed helical torsion springs (52, 53), whose threads have opposite directions and whose facing inner spring legs (54, 55) are interconnected in one-piece manner by a wire bridge (56) supported on the associated nose (29'), whilst their outer spring legs (57, 58) are supported with pretension in facing manner on the link (27').

15. Steam pressure cooker according to claim 14, characterized in that the inner spring legs (54, 55) and the outer spring legs (57, 58), considered in the axial direction of the helical torsion springs (52, 53), are directed in converging manner to one another towards the associated link (27') also in the closed position.

16. Steam pressure cooker according to any one of the claims 2 to 8, **characterized in that** noses (29'') are fitted in uniformly circumferentially distributed, downwardly directed manner to the lower edge (63) of the circumferential wall (12, 13, 14') of the dome (6', 6'') in the same numbers as there are clips (10'), which engage in link slots (28'') located in the lower leg (34') of the clips (10'), wherein within each link slot (28'') there is a locking recess (45''), in which is latched in the open position the associated nose (29'') following a limited rotation of the dome (6', 6'') relative to the clips (10').

17. Steam pressure cooker according to any one of the claims 1 to 16, **characterized in that** the springs (30'', 30''') are constructed as a one-piece, annular bending spring, which is positioned coaxially to the centering ring (8', 8'') and on the one hand is supported with upwardly directed, circumferentially uniformly distributed bulges (64, 64') in a circular corrugation (68, 68') of the dome (6', 6'') and on the other hand with downwardly directed, circumferentially uniformly distributed bulges (65, 65') on the centering ring (8', 8'').

18. Steam pressure cooker according to any one of the claims 1 to 17, **characterized in that** the edge of the cooker (1) is constructed as a pouring edge (5), in such a way that its cross-section has an upwardly directed, convex curvature, which is associated in facing manner with the lower sealing surface (26) of the sealing ring (7).

## Patentansprüche

1. Dampfdruckkochtopf, bestehend aus
einem oben offenen Topf (1) mit einem seine Öffnung umgebenden, umlaufend gleichförmigen Rand (5),
einem unter Zwischenlage eines durch den Innendruck abdichtenden Dichtrings (7) auf den Rand (5) aufsetzbaren mehrteiligen Deckel (2), der eine zur Mittelachse des Topfes und des Deckels konzentrische Haube (6) aufweist, an welcher ein Griff (3) und eine Druckbegrenzungs-, Sicherheits-, Abdampf- und Entlüf-tungsventilanordnung angebracht sind,
einer Verschlußmechanik, deren die Ränder (5, 11) von Topf (1) und Haube (6) in der Schließstellung umgreifenden und in der Öffnungsstellung den Rand (5) des Topfes (1) freigebenden Klammern (10) von Bewegungen der Haube (6) gegenüber dem Topf (1) in ihren radial einwärts bzw. radial auswärts gerichteten Verlagerungsbewegungen gesteuert werden, und
einem ein Teil des Deckels (2) bildenden, konzentrisch zur Haube (6) angeordneten und den Dichtring (7) haltenden Winkelprofilring, demgegenüber die Haube (6) zur Aufhebung oder Herbeiführung einer Abdichtung zwischen Haube (6) und Winkelprofilring in axialer Richtung verlagerbar ist, wobei Haube (6) und Winkelprofilring durch Federkraft in Abdichtrichtung beaufschlagt sind und zwischen Haube (6) und Winkelprofilring von Relativbewegungen zwischen diesen Elementen betätigte Sperrglieder (29, 45) die Aufhebung der Abdichtung zwischen Haube und Winkelprofilring wahlweise fixieren oder die Abdichtung ermöglichen,
**dadurch gekennzeichnet,**
daß die Haube (6) den Rand (5) des Topfes (1) mit einer abwärts gerichteten Umfangswand (12, 13, 14) mit radialem Abstand übergreift, die im unteren Bereich (Zylinderabschnitt 14) mit einer zylindrischen Innenfläche (17) versehen ist, an welcher eine durch den Innendruck beaufschlagte Dichtlippe (22) des Dichtrings (7) axial verschiebbar ist, und die im oberen Bereich (Wandabschnitt 12) zur Aufhebung der dichten Anlage der Dichtlippe (22) ausgebildet ist,
daß der Winkelprofilring durch eine in den Topf (1) eingreifende hohlzylindrische Wandung (19) als Zentrierring (8) ausgebildet ist, der mit einem sich radial nach außen erstreckenden und mit Abstand von der zylindrischen Innenfläche (17) endenden Flansch (20) dem Dichtring (7) oben anliegt, der sich mit seiner Innenfläche an der hohlzylindrischen Wandung (19) des Zentrierrings (8) abstützt,
daß am Dichtring (7) nach unten weisende Verschlußelemente (Zungen 36) befestigt sind, die durch den radialen Abstand zwischen der Umfangswand (12, 13, 14) der Haube (6) und dem Rand (5) des Topfes (1) hindurch nach unten vorstehen und mit Führungselementen (Führungsschlitze 37) der Klammern (10) zu deren radialer Verlagerung eingreifen,
daß die Klammern (10) gegenüber der Haube (6) in axialer Richtung unverschiebbar angeordnet sind und
daß der Zentrierring (8) und die Haube (6) durch miteinander eingreifende Elemente (Kulissen 27, 27', Nasen 29, 29') axial verschiebbar aneinander geführt und in der Öffnungsstellung verrastbar sind, wobei zwischen Zentrierring (8) und Haube (6) bei axialer Annäherung von Zentrierring und Haube zunehmend gespannte Federn (30, 30') angeordnet sind.

2. Dampfdruckkochtopf, bestehend aus
einem oben offenen Topf (1) mit einem seine Öffnung umgebenden, umlaufend gleichförmigen Rand (5),
einem unter Zwischenlage eines durch den Innendruck abdichtenden Dichtrings (7) auf den Rand (5) aufsetzbaren mehrteiligen Deckel (2), der eine zur Mittelachse des Topfs und des Deckels konzentrische Haube (6', 6'') aufweist, an welcher ein Griff (3) und eine Druckbegrenzungs-, Sicherheits-, Abdampf- und Entlüftungsventilanordnung angebracht sind,
einer Verschlußmechanik, deren die Ränder (5, 11) von Topf (1) und Haube (6', 6'') in der Schließstellung umgreifenden und in der Öffnungsstellung den Rand (5) des Topfs (1) freigebenden Klammern (10') von Bewegungen der Haube (6', 6'') gegenüber dem Topf (1) in ihren radial einwärts bzw. radial auswärts gerichteten Verlagerungsbewegungen gesteuert werden, und
einem ein Teil des Deckels (2) bildenden, konzentrisch zur Haube (6', 6'') angeordneten und den Dichtring (7) haltenden Winkelprofilring demgegenüber die Haube (6', 6'') zur Aufhebung oder Herbeiführung einer Abdichtung zwischen Haube (6', 6'') und Winkelprofilring in axialer Richtung verlagerbar ist, wobei Haube (6', 6'') und Winkelprofilring durch Federkraft in Abdichtrichtung beaufschlagt sind und an der Haube (6', 6'') angebrachte und von deren Bewegungen betätigte Sperrglieder (29'', 45'') die Aufhebung der Abdichtung zwischen Haube und Winkelprofilring wahlweise fixieren oder die Abdichtung ermöglichen,
**dadurch gekennzeichnet,**
daß die Haube (6', 6'') den Rand (5) des Topfs (1) mit einer abwärts gerichteten Umfangswand (12, 13, 14') mit radialem Abstand übergreift, die im unteren Bereich (Zylinderabschnitt 14') mit einer zylindrischen Innenfläche (17) versehen ist, an welcher eine durch den Innendruck beaufschlagte Dichtlippe (22) des Dichtrings (7) axial verschiebbar ist, und die im oberen Bereich (Wandabschnitt 12) zur Aufhebung der dichten Anlage der Dichtlippe (22) ausgebildet ist,
daß der Winkelprofilring durch eine in den Topf (1) eingreifende hohlzylindrische Wandung (19) als Zentrierring (8', 8'') ausgebildet ist, der mit einem sich radial nach außen erstreckenden und mit Abstand von der zylindrischen Innenfläche (17) endenden Flansch (20, 20') dem Dichtring (7) oben anliegt, der sich mit seiner Innenfläche an der hohlzylindrischen Wandung (19) des Zentrierrings (8', 8'') abstützt,
daß am Dichtring (7) nach unten weisende Verschlußelemente (Zungen 36) befestigt sind, die durch den radialen Abstand zwischen der Umfangswand (12, 13, 14') der Haube (6', 6'') und dem Rand (5) des Topfs (1) hindurch nach unten vorstehen und mit Führungselementen (Führungsschlitze 37) der Klammern (10') zu deren radialer Verlagerung eingreifen,
daß die Klammern (10') gegenüber der Haube (6', 6'') in axialer Richtung unverschiebbar angeordnet sind und
daß die Klammern (10') und die Haube (6', 6'') durch miteinander eingreifende Elemente (Kulissen 27'', Nasen 29'') radial verschiebbar aneinander geführt und in der Öffnungsstellung verrastbar sind, wobei zwischen Zentrierring (8', 8'') und Haube (6', 6'') bei axialer Annäherung von Zentrierring und Haube zunehmend gespannte Federn (30'', 30''') angeordnet sind.

3. Dampdruckkochtopf nach Anspruch 1 oder 2, **dadurch gekennzeichnet,** daß die Umfangswand (12, 13, 14) der Haube (6) in ihrem oberen Bereich (Wandabschnitte 12, 13) zur Bildung einer Aufweitung (15) gegenüber der zylindrischen Innenfläche (17) ihres unteren Bereichs (Zylinderabschnitt 14) im Durchmesser vergrößert ist, wobei mindestens ein an die zylindrische Innenfläche (17) fluchtend anschließender Steg (16) in die Aufweitung (15) hineinreicht.

4. Dampfdruckkochtopf nach einem der Ansprüche 1 bis 3, **dadurch gekennzeichnet,** daß sich durch den radialen Abstand zwischen dem Flansch (20) des Zentrierrings (8) und der zylindrischen Innenfläche (17) hindurch die Dichtlippe (22) des Dichtrings (7) nach oben erstreckt, die der zylindrischen Innenfläche (17) in der Schließstellung mit einer Dichtkante (24) umfänglich dicht anliegt und eine dem Innendruck ausgesetzte Innenfläche (25) aufweist.

5. Dampfdruckkochtopf nach einem der Ansprüche 1 bis 4, **dadurch gekennzeichnet,** daß der Dichtring (7) eine Außenumfangsnut besitzt, in welche ein Stützring (9) eingesetzt ist, dessen Außenumfang einen kleineren Durchmesser als die zylindrische Innenfläche (17) aufweist und der die Dichtlippe (22) von unten abstützt.

6. Dampfdruckkochtopf nach einem der Ansprüche 1, 2 und 5, **dadurch gekennzeichnet,** daß die nach unten weisenden Verschlußelemente (Zungen 36) an dem Stützring (9) befestigt sind.

7. Dampfdruckkochtopf nach einem der Ansprüche 1 bis 6, **dadurch gekennzeichnet,** daß die Verschlußelemente als plattenförmig ebene, tangential zum Haubenumfang ausgerichtete Zungen (36) ausgebildet sind, für jede Klammer (10) paarweise vorgesehen sind und jeweils einen zur Seite abgewinkelten längeren Schenkel (39) besitzen, der in einen schräggestellten Führungsschlitz (37) im unteren Schenkel (34) der U-förmig profilierten zugehörigen Klammer (10) verschiebbar eingreift, wobei die längeren Schenkel (39) jedes einer Klammer (10) zugeordneten Zungenpaars nach unten zu konvergierend ausgerichtet sind, während die beiden zugehörigen Führungsschlitze (37) der Klammer (10) bezüglich der Topfachse in Einwärtsrichtung konvergierend ausgerichtet sind.

8. Dampfdruckkochtopf nach einem der Ansprüche 1 bis 7, **dadurch gekennzeichnet,** daß der gegenseitige Abstand der Schenkelinnenflächen der Klammern (10) der Höhe der Umfangswand (12, 13, 14) der Haube (6) unter Einschluß eines Bewegungsspiels entspricht.

9. Dampfdruckkochtopf nach einem der Ansprüche 1 und 3 bis 7, **dadurch gekennzeichnet,** daß innen an der Haube (6) am Umfang verteilt mehrere nach unten gerichtete und in den Zentrierring (8) hineinreichende Kulissen (27, 27') befestigt sind, deren nach unten offene Kulissenschlitze (28, 28') jeweils eine an der Innenfläche der hohlzylindrischen Wandung (19) des Zentrierrings (8) befestigte Nase (29, 29') aufnehmen, wobei innerhalb jedes Kulissenschlitzes (28, 28') eine Sperrausnehmung (45, 45') vorgesehen ist, in welche die zugeordnete Nase (29, 29') in der Öffnungsstellung eingerastet ist.

10. Dampfdruckkochtopf nach den Ansprüchen 1 und 9, **dadurch gekennzeichnet,** daß die Kulissenschlitze (28) in den Kulissen (27) oben jeweils mit einer Endausnehmung (47, 47') aufhören, in welche die zugehörige Nase (29, 29') eingetreten ist, wenn die Haube (6) gegenüber dem Zentrierring (8) zum Zerlegen des Deckels bis zum Austritt der Zungen (36) aus den Führungsschlitzen (37) gegen den elastischen Widerstand der Dichtlippe (22) axial verlagert ist, wobei die Klammern (10) nach Austritt der Zungen (36) aus den Führungsschlitzen (37) radial nach außen abziehbar sind.

11. Dampfdruckkochtopf nach Anspruch 9 oder 10, **dadurch gekennzeichnet,** daß an jeder Kulisse (27) eine als Schraubendrehfeder ausgebildete Feder (30) vorgesehen ist, deren Enden (31, 33) mit Vorspannung einerseits an der Kulisse (27) und andererseits an der zugehörigen Nase (29) abgestützt sind.

12. Dampfdruckkochtopf nach den Ansprüchen 9 bis 11, **dadurch gekennzeichnet,** daß die Einrastung der Nasen (29) in die Sperrausnehmungen (45) der Kulissenschlitze (28) durch die von den Federn (30) erzeugte Querkraft unterstützt ist, welche der entgegengesetzt gerichteten Ausrastung entgegenwirkend ist.

13. Dampfdruckkochtopf nach Anspruch 9 oder 10, **dadurch gekennzeichnet,** daß die Kulissenschlitze (28') jeweils einen der Sperrausnehmung (45') gegenüberliegenden schräg verlaufenden Wandabschnitt (50) aufweisen, welcher bei der Öffnungsverlagerung der Haube (5) auf die zugehörige Nase (29') auftrifft und eine kleine Drehverlagerung zwischen Haube (6) und Zentrierring (8) herbeiführt, bis die Nase (29') in die Sperrausnehmung (45') eingerastet ist

14. Dampfdruckkochtopf nach den Ansprüchen 11 und 13, **dadurch gekennzeichnet,** daß an jeder Kulisse (27') eine aus zwei mit Abstand zueinander und gleichachsig nebeneinander angeordnete Schraubendrehfedern (52, 53) bestehende Feder (30') vorgesehen ist, deren Windungen entgegengesetzten Windungssinn aufweisen und deren gegenüberliegenden inneren Federschenkel (54, 55) durch eine an der zugehörigen Nase (29') abgestützte Drahtbrücke (56) einteilig miteinander verbunden sind, während deren äußeren Federschenkel (57, 58) gegenüberliegend an der Kulisse (27') mit Vorspannung abgestützt sind.

15. Dampfdruckkochtopf nach Anspruch 14, **dadurch gekennzeichnet,** daß die inneren Federschenkel (54, 55) und die äußeren Federschenkel (57, 58) in Achsrichtung der Schraubendrehfedern (52, 53) gesehen, auch in der Schließstellung in Richtung auf die zugehörige Kulisse (27') zueinander konvergierend gerichtet sind.

16. Dampfdruckkochtopf nach einem der Ansprüche 2 bis 8, **dadurch gekennzeichnet,** daß an der Unterkante (63) der Umfangswand (12, 13, 14') der Haube (6', 6'') in derselben Anzahl wie die Klammern (10') gleichmäßig über den Umfang verteilt nach unten weisende Nasen (29'') angebracht sind, welche in Kulissenschlitze (28'') eingreifen, die sich im unteren Schenkel (34') der Klammern (10') befinden, wobei innerhalb jedes Kulissenschlitzes (28'') eine Sperrausnehmung (45'') vorgesehen ist, in welche die zugeordnete Nase (29'') nach einer geringen Drehung der Haube (6', 6'') relativ zu den Klammern (10') in der Öffnungsstellung eingeklinkt ist.

17. Dampfdruckkochtopf nach einem der Ansprüche 1 bis 16, **dadurch gekennzeichnet,** daß die Federn (30'', 30''') als eine einteilige ringförmige Biegefeder ausgebildet sind, wobei die Biegefeder koaxial zum Zentrierring (8', 8'') angeordnet ist und sich einerseits mit nach oben weisenden umfänglich gleichmäßig verteilten Ausbuchtungen (64, 64') in einer ringförmigen Sicke (68, 68') der Haube (6', 6'') und andererseits mit nach unten weisenden umfänglich gleichmäßig verteilten Ausbuchtungen (65, 65') an dem Zentrierring (8', 8'') abstützen.

18. Dampfdruckkochtopf nach einem der Ansprüche 1 bis 17, **dadurch gekennzeichnet,** daß der Rand des Topfs (1) als Schüttrand (5) ausgebildet ist, derart, daß sein Querschnitt eine nach oben gerichtete konvexe Wölbung aufweist, welcher die untere Dichtfläche (26) des Dichtrings (7) gegenüberliegend zugeordnet ist.

## Revendications

1. Marmite à pression constituée par :
- une cuve (1) comportant un bord (5) circonférentiel de forme régulière, entourant son ouverture,
- un couvercle (2) en plusieurs parties, susceptible d'être posé sur le bord (5) avec interposition d'un joint d'étanchéité (7) qui réalise l'étanchéité grâce à la pression intérieure, ledit couvercle présentant une calotte (6) concentrique par rapport à l'axe médian de la cuve et du couvercle, une poignée (3) et un dispositif de soupape de limitation de pression, de sécurité, d'évacuation de la vapeur et de mise à l'air étant montés sur la calotte,
- un mécanisme de fermeture dont les crampons (10) qui saisissent les bords (5, 11) de la cuve (1) et de la calotte (6) en position de fermeture et qui libèrent le bord (5) de la cuve (1) en position d'ouverture, sont commandés par des mouvements de la calotte (6) par rapport à la cuve (1) dans ses mouvements de déplacement orientés radialement vers l'intérieur et radialement vers l'extérieur, respectivement, et
- un anneau de profil angulaire formant une partie du couvercle (2), agencé de manière concentrique par rapport à la calotte (6) et maintenant le joint d'étanchéité (7), par rapport auquel la calotte (6) est susceptible d'être déplacée en direction axiale pour annuler ou pour réaliser une étanchéité entre la calotte (6) et l'anneau de profil angulaire, la calotte (6) et l'anneau de profil angulaire étant sollicités en direction d'étanchéité par une force de ressort, et entre la calotte (6) et l'anneau de profil angulaire, des organes de blocage (29, 45) actionnés par des mouvements relatifs entre ces éléments, permettant au choix soit de fixer l'annulation de l'étanchéité entre la calotte et l'anneau de profil angulaire soit de procéder à l'étanchéité,
caractérisée :
en ce que la calotte (6) chevauche à distance radiale le bord (5) de la cuve (1) avec une paroi circonférentielle (12, 13, 14) dirigée vers le bas, qui est pourvue dans la région inférieure (tronçon cylindrique 14) d'une surface intérieure (17) cylindrique sur laquelle une lèvre d'étanchéité (22) du joint d'étanchéité (7), qui est sollicitée par la pression intérieure, est susceptible d'être déplacée axialement, ladite paroi étant réalisée dans la région supérieure (tronçon de paroi 12) pour annuler le contact étanche de la lèvre d'étanchéité (22),
en ce que l'anneau de profil angulaire est réalisé grâce à une paroi (19) cylindrique creuse s'engageant dans la cuve (1) et sert de bague de centrage (8), et avec une bride (20) s'étendant radialement vers l'extérieur et se terminant à distance de la surface intérieure (17) cylindrique, ledit anneau repose en haut sur le joint d'étanchéité (7) qui s'appuie avec sa surface intérieure sur la paroi (19) cylindrique creuse de la bague de centrage (8),
en ce que sur le joint d'étanchéité (7) sont fixés des éléments de fermeture (languettes 36) dirigés vers le bas qui font saillie vers le bas à travers l'écartement radial entre la paroi circonférentielle (12, 13, 14) de la calotte (6) et le bord (5) de la cuve (1) et qui s'engagent avec des éléments de guidage (fentes de guidage 37) des crampons (10) pour les déplacer radialement,
en ce que les crampons (10) sont agencés de manière indéplaçable en direction axiale par rapport à la calotte (6), et
en ce que la bague de centrage (8) et la calotte (6) sont guidées à déplacement axial l'une sur l'autre grâce à des éléments s'engageant les uns dans les autres (coulisses 27, 27', tenons 29, 29') et sont susceptibles d'être enclenchées dans la position d'ouverture, des ressorts (30, 30') étant agencés entre la bague de centrage (8) et la calotte (6), lesdits ressorts étant tendus de façon croissante lorsque la bague de centrage et la calotte se rapprochent axialement.

2. Marmite à pression constituée par :
- une cuve (1) comportant un bord (5) circonférentiel de forme régulière, entourant son ouverture,
- un couvercle (2) en plusieurs parties susceptible d'être posé sur le bord (5) avec interposition d'un joint d'étanchéité (7) qui réalise l'étanchéité grâce à la pression intérieure, ledit couvercle présentant une calotte (6', 6'') concentrique par rapport à l'axe médian de la cuve et du couvercle, une poignée (3) et un dispositif de soupape de limitation de pression, de sécurité, d'évacuation de la vapeur et de mise à l'air étant montés sur la calotte,
- un mécanisme de fermeture dont les crampons (10') qui saisissent les bords (5, 11) de la cuve (1) et de la calotte (6', 6'') en position de fermeture et qui libèrent le bord (5) de la cuve (1) en position d'ouverture, sont commandés par des mouvements de la calotte (6', 6'') par rapport à la cuve (1) dans ses mouvements de déplacement orientés radialement vers l'intérieur et radialement vers l'extérieur, respectivement, et
- un anneau de profil angulaire formant une partie du couvercle (2), agencé de manière concentrique par rapport à la calotte (6', 6'') et maintenant le joint d'étanchéité (7), par rapport auquel la calotte (6', 6'') est susceptible d'être déplacée en direction axiale pour annuler ou pour réaliser une étanchéité entre la calotte (6', 6'') et l'anneau de profil angulaire, la calotte (6', 6'') et l'anneau de profil angulaire étant sollicités en direction d'étanchéité par une force de ressort, et des organes de blocage (29'', 45'') montés sur la calotte (6', 6'') et actionnés par ses mouvements, permettant au choix soit de fixer l'annulation de l'étanchéité entre la calotte et l'anneau de profil angulaire soit de procéder à l'étanchéité,
caractérisée :
en ce que la calotte (6', 6'') chevauche à distance radiale le bord (5) de la cuve (1) avec une paroi circonférentielle (12, 13, 14') dirigée vers le bas, qui est pourvue dans la région inférieure (tronçon cylindrique 14') d'une surface intérieure (17) cylindrique sur laquelle une lèvre d'étanchéité (22) du joint d'étanchéité (7), qui est sollicitée par la pression intérieure, est susceptible d'être déplacée axialement, ladite paroi étant réalisée dans la région supérieure (tronçon de paroi 12) pour annuler le contact étanche de la lèvre d'étanchéité (22),
en ce que l'anneau de profil angulaire est réalisé grâce à une paroi (19) cylindrique creuse s'engageant dans la cuve (1) et sert de bagne de centrage (8', 8''), et avec une bride (20', 20'') s'étendant radialement vers l'extérieur et se terminant à distance de la surface intérieure (17) cylindrique, ledit anneau repose en haut sur le joint d'étanchéité qui s'appuie avec sa surface intérieure sur la paroi (19) cylindrique creuse de la bague de centrage (8', 8''),
en ce que sur le joint d'étanchéité (7) sont fixés des éléments de fermeture (languettes 36) dirigés vers le bas qui font saillie vers le bas à travers l'écartement radial entre la paroi circonférentielle (12, 13, 14') de la calotte (6', 6'') et le bord (5) de la cuve (1) et qui s'engagent avec des éléments de guidage (fentes de guidage 37) des crampons (10') pour les déplacer radialement,
en ce que les crampons (10') sont agencés de manière indéplaçable en direction axiale par rapport à la calotte (6', 6''), et
en ce que les crampons (10') et la calotte (6', 6'') sont guidés à déplacement radial les uns contre les autres grâce à des éléments s'engageant les uns dans les autres (coulisses 27'', tenons 29'') et sont susceptibles d'être enclenchés dans la position d'ouverture, des ressorts (30'', 30''') étant agencés entre la bague de centrage (8', 8'') et la calotte (6', 6''), lesdits ressorts (30'', 30''') étant tendus de façon croissante lorsque la bague de centrage et la calotte se rapprochent axialement.

3. Marmite sous pression selon l'une ou l'autre des revendications 1 et 2, caractérisée en ce que la paroi circonférentielle (12, 13, 14) de la calotte (6) est agrandie de diamètre dans sa région supérieure (tronçons de paroi 12, 13) pour former un évasement (15) par rapport à la surface intérieure cylindrique (17) de sa région inférieure (tronçon cylindrique 14), et au moins un voile (16) se raccordant en affleurement à la surface intérieure (17) cylindrique s'engage jusque dans l'évasement.

4. Marmite sous pression selon l'une quelconque des revendications 1 à 3, caractérisée en ce que la lèvre d'étanchéité (22) du joint d'étanchéité (7) s'étend vers le haut à travers l'écartement radial entre la bride (20) de la bague de centrage (8) et la surface intérieure (17) cylindrique, ladite lèvre d'étanchéité reposant dans la position de fermeture sur la périphérie de la surface intérieure (17) cylindrique de manière étanche avec une arête d'étanchéité (24) et présentant une surface intérieure (25) soumise à la pression intérieure.

5. Marmite sous pression selon l'une quelconque des revendications 1 à 4, caractérisée en ce que le joint d'étanchéité (7) possède une gorge circonférentielle extérieure dans laquelle est mise en place une bague d'appui (9) dont la circonférence extérieure présente un diamètre inférieur à la surface intérieure cylindrique (17) et qui soutient la lèvre d'étanchéité (22) par le bas.

6. Marmite sous pression selon l'une quelconque des revendications 1, 2 et 5, caractérisée en ce que les éléments de fermeture dirigés vers le bas (languettes 36) sont fixés sur la bague d'appui (9).

7. Marmite sous pression selon l'une quelconque des revendications 1 à 6, caractérisée en ce que les éléments de fermeture sont réalisés sous forme de languettes (36) en forme de plaques planes et tangentielles à la circonférence de la calotte, pour chacune desquelles des crampons (10) sont prévus par paires, et qui possèdent chacune une branche (39) plus longue coudée vers le côté qui s'engage dans une fente de guidage (37) oblique dans la branche inférieure (34) du crampon associé (10) à profil en forme de U, la branche (39) plus longue de chaque paire de languettes associées à un crampon (10) étant orientée de façon convergente vers le bas tandis que les deux fentes de guidage (37) correspondantes des crampons (10) sont orientées de façon convergente vers l'intérieur par rapport à l'axe de la cuve.

8. Marmite sous pression selon l'une quelconque des revendications 1 à 7, caractérisée en ce que l'écartement réciproque des surfaces intérieures des branches des crampons (10) correspond à la hauteur de la paroi circonférentielle (12, 13, 14) de la calotte (6) y compris un jeu fonctionnel.

9. Marmite sous pression selon l'une quelconque des revendications 1 et 3 à 7, caractérisée en ce qu'à l'intérieur de la calotte sont fixées plusieurs coulisses (27, 27') réparties sur la périphérie, dirigées vers le bas et s'étendant jusque dans la bague de centrage (8), dont les fentes de coulisse (28, 28') ouvertes vers le bas reçoivent chacune un tenon (29, 29') fixé sur la surface intérieure de la paroi (19) cylindrique creuse de la bague de centrage (8), un évidement de blocage (45, 45') étant prévu à l'intérieur de chaque fente de coulisse (28, 28'), dans lequel est enclenché le tenon (29, 29') correspondant dans la position d'ouverture.

10. Marmite sous pression selon les revendications 1 et 9, caractérisée en ce que les fentes de coulisse (28) se terminent dans le haut de chaque coulisse (27) par un évidement d'extrémité (47, 47') dans lequel a pénétré le tenon (29, 29') correspondant lorsque la calotte (6) est déplacée axialement par rapport à la bague de centrage (8) pour démonter le couvercle jusqu'à la sortie des languettes (36) hors des fentes de guidage (37) à l'encontre de la résistance élastique de la lèvre d'étanchéité (22), et après la sortie des languettes (36) hors des fentes de guidage (37), les crampons (10) étant susceptibles d'être retirés radialement vers l'extérieur.

11. Marmite sous pression selon l'une ou l'autre des revendications 9 et 10, caractérisée en ce qu'il est prévu sur chaque coulisse (27) un ressort (30) réalisé sous la forme d'un ressort hélicoïdal rotatif dont les extrémités (31, 33) sont appuyées avec précontrainte d'une part sur la coulisse (27) et d'autre part sur le tenon (29) correspondant.

12. Marmite sous pression selon l'une quelconque des revendications 9 à 11, caractérisée en ce que l'enclenchement des tenons (29) dans les évidements de blocage (45) des fentes de coulisse (28) est assisté par la force transversale produite par les ressorts (30), qui agit à l'encontre du désenclenchement orienté à l'opposé.

13. Marmite sous pression selon l'une ou l'autre des revendications 9 et 10, caractérisée en ce les fentes de coulisse (28') présentent chacune un tronçon de paroi (50) s'étendant en oblique à l'opposé de l'évidement de blocage (45'), ledit tronçon de paroi venant toucher le tenon correspondant (29') lorsque l'ouverture de la calotte (5) est déplacée et provoquant un petit déplacement rotatif entre la calotte (6) et la bague de centrage (8) jusqu'à ce que le tenon (29') s'enclenche dans l'évidement de blocage (45').

14. Marmite sous pression selon les revendications 11 et 13, caractérisée en ce qu'il est prévu sur chaque coulisse (27') un ressort (30') constitué par deux ressorts rotatifs hélicoïdaux (52, 53) agencés à distance l'un de l'autre et l'un à côté de l'autre sur le même axe, dont les spires présentent un sens de spire opposé et dont les branches élastiques intérieures (54, 55) opposées sont reliées l'une à l'autre d'une seule pièce par un pont en fil (56) en appui sur le tenon (29') associé, tandis que leurs branches de ressort extérieures (57, 58) sont en appui du côté opposé sur la coulisse (27') avec précontrainte.

15. Marmite sous pression selon la revendication 14, caractérisée en ce que les branches de ressort intérieures (54, 55) et les branches de ressort extérieures (57, 58), vues en direction de l'axe des ressorts rotatifs hélicoïdaux (52, 53), sont aussi dirigées de façon convergente les unes par rapport aux autres dans la position de fermeture en direction de la coulisse (27') correspondante.

16. Marmite sous pression selon l'une quelconque des revendications 2 à 8, caractérisée en ce que des tenons (29'') dirigés vers le bas sont répartis régulièrement sur la périphérie de l'arête inférieure (63) de la paroi circonférentielle (12, 13, 14') de la calotte (6', 6''), dans le même nombre que les crampons (10'), lesdits tenons s'engageant dans des fentes de coulisses (28'') qui se trouvent dans la branche inférieure (34') des crampons (10'), et à l'intérieur de chaque fente de coulisse (28'') il est prévu un évidement de blocage (45'') dans lequel le tenon (29'') correspondant est encliqueté dans la position d'ouverture après une faible rotation de la calotte (6', 6'') par rapport aux crampons (10').

17. Marmite sous pression selon l'une quelconque des revendications 1 à 16, caractérisée en ce que les ressorts (30'', 30''') sont réalisés sous la forme d'un ressort spiral annulaire d'une seule pièce, le ressort spiral étant agencé coaxialement par rapport à la bague de centrage (8', 8'') et s'appuyant d'une part avec des bossages (64', 64'') orientés vers le haut et répartis régulièrement à la circonférence dans une moulure annulaire (68, 68') de la calotte (6', 6'') et d'autre part avec des bossages (65, 65') orientés vers le bas et répartis régulièrement à la circonférence sur la bague de centrage (8', 8'').

18. Marmite sous pression selon l'une quelconque des revendications 1 à 17, caractérisée en ce le bord de la cuve (1) est réalisé comme bord verseur de tel sorte que sa section transversale présente une courbure convexe dirigée vers le haut à laquelle est associée à l'opposé la surface inférieure d'étanchéité (26) du joint d'étanchéité (7).
